# EUROPEAN PATENT APPLICATION

(11) **EP 2 469 777 A1**
(43) Date of publication of application: **27.06.2012**
(21) Application number: 11195358.4
(22) Date of filing: 22.12.2011
(51) Int. Cl.: H04L 12/56

(54) **Packet transport node**

(30) Priority: 24.12.2010 JP 2010286910
(71) Applicant: Hitachi Ltd., Tokyo 100-8280 (JP)
(72) Inventor: Takase, Masayuki, Tokyo, 100-8220 (JP); Fujihira, Kenji, Tokyo, 100-8220 (JP); Shibata, Takeshi, Tokyo, 100-8220 (JP)
(74) Representative: MERH-IP Matias Erny Reichl Hoffmann

(57) **Abstract**

A packet transport node 320 that composes a transport network 302, the transport network 302 transports networks that is composed with a communication protocol, the network transports networks is established logical paths used a routing protocol. The packet transport node forwards a user data packet 100 and a routing protocol packet to an appropriate destination. The packet transport node 320 learns correspondence between a logical path of a transport network 302 and a MAC address based on a MAC header 111 of a received packet and learns correspondence between a logical path of a transport network 302 and a logical path used in other network by snooping a routing protocol packet 200.

## Description

### FIELD OF THE INVENTION

The present invention relates to a packet transport node and, more specifically, in a network composed with a transport protocol of a connection oriented logical path, the packet transport node transports the other transport protocol of a connection oriented logical path.

### BACKGROUND OF THE INVENTION

In recent years, communication carriers and ISP (Internet Service Provider) that compose networks with a transport protocol of connection oriented type have been increasing. For example, there are IP/MPLS (Internet Protocol/ Multi Protocol Label Switching), MPLS-TP (Multi Protocol Label Switching Transport Profile), and PBB (Provider Backbone Bridges) as the transport protocol of connection oriented type. The transport protocol of connection oriented type can compose a logical path among End-to-End and provide high security communication routes. Therefore the transport protocol of connection oriented type is suitable for providing services, VPN (Virtual Private Network) and so on.

Networks of communication carriers and ISPs are often composed with different communication protocols for each communication carriers and ISPs. And Communication carriers who do not have a nationwide network connect networks that are geographically distant by borrowing transport networks of a communication carrier who have a nationwide network. At this time, for transport networks, it is expected to transport data packet of communication carriers using transport networks accurately and to go through routing protocol of the communication carriers who use the transport network. To connect two networks with each other is called interwork.

For example, technology for interwork two networks is disclosed in Japanese Unexamined Patent Application Publication No.2001-345865 and No.2003-092586.

Japanese Unexamined Patent Application Publication No. 2001-345865 discloses the technology for interwork IP packet added a tag with IP/MPLS protocol. In this technology, communication node that interworks protocols has a table to mapping VLAN ID and IP/MPLS logical path, upon receiving packet added a VLAN tag, retrieves an IP/MPLS path based on a VLAN ID of received packet, and adds a MPLS label to identify the IP/MPLS logical path to the received packet Therefore packet forwarding in a IP/MPLS network can be fulfilled.

Japanese Unexamined Patent Application Publication No.2003-092586 discloses the technology for interwork non-VLAN tag Ethernet packet with IP/MPLS protocol. Data lines are often called frame. However, in this specification, data lines are called packet. In this technology, communication node that interworks protocols has a learning table for MAC address and IP/MPLS and upon receiving a packet from the IP/MPLS network, learns correspondence information between a IP/MPLS logical path and a source MAC address of the received packet autonomously and creates the learning table. Also upon receiving a packet from a Ethernet network, the communication node retrieves the learning table based on a destination MAC address of the received packet, obtains information of IP/MPLS label to be added the received packet, and adds a MPLS label to identify an IP/MPLS logical path to the received packet. Therefore packet forwarding in an IP/MPLS network can be fulfilled.

### SUMMARY OF THE INVENTION

There are a first communication carrier whose network is composed with transport protocol of connection oriented type 1 and a second communication carrier whose network is composed with transport protocol of connection oriented type2. The first communication carrier connects networks which are geographically distant via a transport network of second communication carrier.

In case a communication protocol 1 of the first communication carrier is a communication protocol that composes logical paths autonomously by using a routing protocol, there are data packets of users who use the network of the first communication carrier and routing protocol packets to set information of logical paths between packet nodes of the first communication carrier in the network of the first communication carrier. To establish logical paths between networks which are geographically distant, the first communication carrier needs to forward the routing packet as same as the data packet of user via the transport network of the second communication carrier.

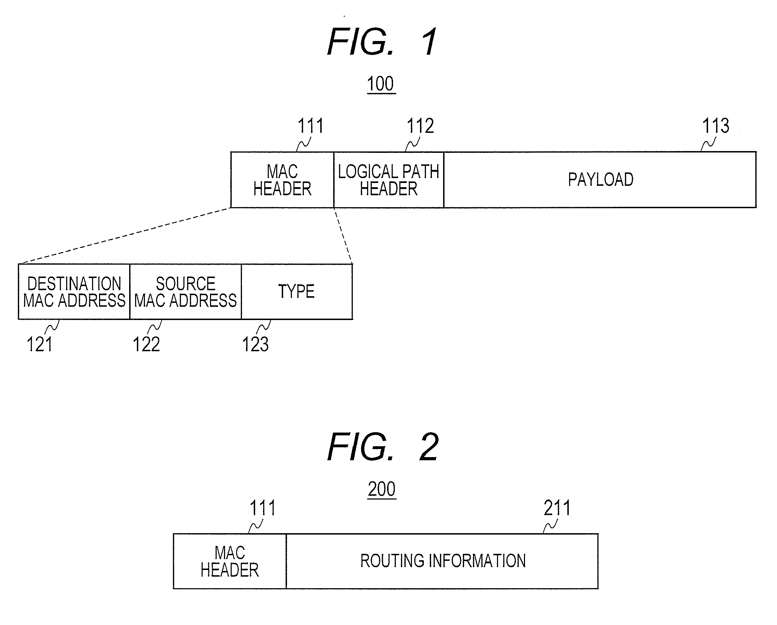

Fig. 1 is a user data packet format 100 of communication protocol 1 and Fig.2 is a routing protocol packet format 200 of communication protocol 1. The user data packet includes a MAC header 111 which corresponds to Layer 2 of OSI (Open Systems Interconnection) reference model, a logical path header 112 to identify a transport logical path in the transport network and payload 113. The MAC header includes a destination MAC address 121 to identify a destination, a source MAC address 122 to identify a source, and a type 123 to identify a protocol of a header to next to the MAC header 111. The routing protocol packet 220 includes a MAC header 111 which corresponds to Layer 2 of OSI (Open Systems Interconnection) reference model and routing information 211. In the communication protocol 1, the header 112 to identify a logical path is not added to the routing protocol packet 112.

Japanese Unexamined Patent Application Publication No.2001-345865 which discloses interworking transport networks whose communication protocol are different from each other assumes that the logical path header 112 to identify a logical path is added to a data format inputted from the network of the communication carrier 1. Therefore, Japanese Unexamined Patent Application Publication No.2001-345865 has a problem that in case the routing packet which does not have the logical path header 112 to identify a logical path is inputted from the network of the first communication carrier to the communication node of the second communication carrier which is located at an edge of the transport network of the second carrier and is adjacent to the transport network of the first communication carrier, the communication cannot forward packets to a destination accurately. Furthermore, the communication node of the second communication carrier cannot distinguish the destination of the data received from the transport network of the first communication carrier, because the communication node of the first communication carrier decides logical paths which are used in the network of the first communication carrier.

In Japanese Unexamined Patent Application No.2003-092586. The destination is decided only based on the destination MAC address 121 of MAC header 111 of data inputted from the network of the first communication carrier. The MAC destination address 121 of data of data inputted from the network of the first communication carrier and the transport logical path of the second communication carrier is related by MAC address learning. In the MAC address learning, the data is received at a first communication node of the second communication carrier received from the network of the first communication carrier, is passed through the transport network of the second communication carrier with the transport logical path and when a second communication node of the second communication carrier which is connected to opposite side of the first communication node of the second communication carrier, the second communication node of the second communication carrier relates transport logical path information of the transport network of the second communication carrier to a source MAC address 122 added the received data. By learning the source address 122 of the received data, the communication node can specify to existing the communication node whose MAC address is the source address 122 at the opposite side of transport logical path.

However, upon establishing the transport network of the second communication carrier by using Japanese Unexamined Patent Application No.2003-092586, the logical path header 112 of the first communication carrier is not used to identify a destination. Therefore, there is a problem that the communication node of the second carrier which is located at an edge of the transport network of the second carrier and adjacent to the network of the first communication carrier can not specify a transport logical path to be forwarded the user data packet 100, when the destination MAC address of the user data packet 100 received from the network of the first communication carrier is a multicast address or broadcast address which means that the data should be copied and forwarded to a plurality of communication node.

Therefore, the communication node copies the user data packet 100 and forwards the copied user data packet to a plurality of transport logical path to be set the communication node, that is to say, the communication node is flooding the data packet 100. Furthermore, there is also a problem that the communication node cannot can not specify a transport logical path of the second communication carrier to be forwarded the user data packet 100, upon receiving the user data packet 100 with unknown MAC address status. Therefore the communication node copies the user data packet 100 and forwards the copied user data packet to a plurality of transport logical path to be set the communication node. If the user data packet 100 is flooding in the transport network of the second communication carrier, a misdelivery would happen for the first communication. That is a problem for the service of the first communication carrier because the first communication carrier provides a security communication service by using logical paths.

The present invention is made in view of such a problem and has an obj ect to provide a packet transport node which can transport user data packets via appropriate one transport logical path in a transport network established with a connection oriented communication protocol upon interworking with two connection oriented communication protocol.

The packet transport node learns correspondence between a logical path of a transport network and a MAC address based on a MAC header of a received packet and learns correspondence between a logical path of a transport network and a logical path used in other network by snooping the routing protocol packet.

The packet transport node can provide a security communication paths upon interworking networks established with a communication protocol which composes logical paths using a routing protocol via the transport network. Moreover, the packet transport node can transport user data packets via appropriate one transport logical path in a transport network established with a connection oriented communication protocol upon interworking with two connection oriented communication protocol.

### BRIEF DESCRIPTION OF THE DRAWINGS

Fig. 1 is a packet format that is received/sent in the network of the first communication carrier;
Fig.2 is a routing protocol packet format that is received/sent between packet nodes of the first communication carrier in the network of the first communication carrier;
Fig. 3 is an example of a transport network composed with packet transport node of the present invention;
Fig. 4 is a packet format that is received/sent in the transport network composed with packet transport node of the present invention;
Fig. 5 is a routing protocol packet format which is received/sent in the transport network composed with packet transport node of the present invention;
Fig. 6 is a configuration of a packet transport node of the present invention;
Fig. 7 is an example of a MAC learning table of the packet transport node of the present invention;
Fig. 8 is an example of an interwork path ID learning table of the packet transport node of the present invention;
Fig.9 is an example of a transport logical path management table of the packet transport node of the present invention;
Fig. 10 is an example of a sequence at the time of learning MAC address and interwork path ID based on routing protocol of the first communication carrier in a packet transport node;
Fig. 11 is an example of information of setting to a table of the packet transport node by the sequence of Fig 10;
Fig. 12 is a flowchart showing operations of the logical path termination unit of the packet transport node of the present invention;
Fig. 13 is a flowchart showing operations of the source MAC address learning unit of the packet transport node of the present invention;
Fig. 14 is a flowchart showing operations of the destination MAC address learning unit of the packet transport node of the present invention;
Fig. 15 is a flowchart showing operations of the routing protocol snooping processing unit of the packet transport node of the present invention;
Fig. 16 is a flowchart showing operations of the interworking path retrieval unit of the packet transport node of the present invention;
Fig. 17 is a flowchart showing operations of the transport logical path processing unit of the packet transport node of the present invention;
Fig. 18 is a configuration of a packet transport node in a second embodiment of the present invention
Fig. 19 is an example of a sequence at the time of learning MAC address and interwork path ID based on routing protocol of the first communication carrier in a packet transport node in a second embodiment ;
Fig. 20 is an example of information of setting to a table of the packet transport node by the sequence of Fig 19;
Fig. 21 is a flowchart showing operations of the destination MAC address learning unit of the packet transport node in a second embodiment;
Fig. 22 is a flowchart showing operations of the routing protocol snooping processing unit of the packet transport node in a second embodiment;
Fig. 23 is a configuration of a packet transport node added a bandwidth control function of the present invention;
Fig. 24 is a configuration of a packet transport node added a bandwidth control function in a second embodiment;
Fig. 25 is an example of a bandwidth management table of the packet transport node added the bandwidth control function of the present invention
Fig. 26 is a flowchart showing operations of the routing protocol snooping processing unit of the packet transport node added the bandwidth control function of the present invention
Fig. 27 is an example of a transport network composed with MPLS-TP transport node in a third embodiment;
Fig. 28 is a configuration of the MPLS-TP transport node in the third embodiment;
Fig. 29 is an example of a IP/MPLS path learning table of the MPLS-TP transport node in the third embodiment;
Fig. 30 is an example of a MPLS-TP path learning table of the MPLS-TP transport node in the third embodiment;

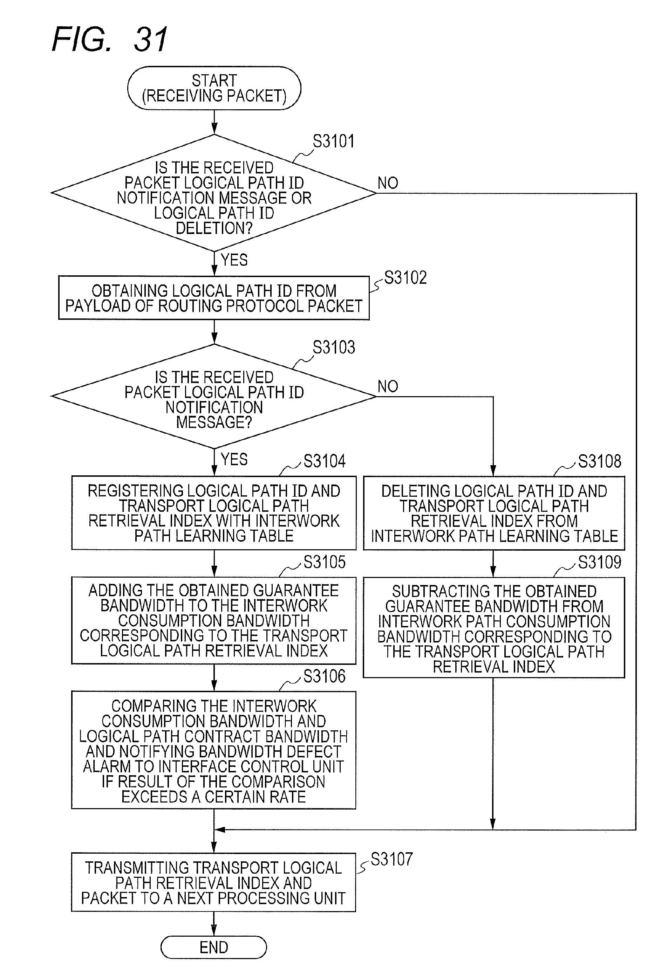

Fig. 31 is a flowchart showing operations of the routing protocol snooping processing unit of the packet transport node added the bandwidth control function in the third embodiment;
Fig. 32 is a packet format that is received/sent in the IP/MPLS network;
Fig.33 is a routing protocol packet format that is received/sent between packet nodes of the first communication carrier in the IP/MPLS network;
Fig. 34 is a packet format that is received/sent in the transport network composed with MPLS-TP transport node in the third embodiment;
Fig. 35 is a routing protocol packet format that is received/sent in the transport network composed with MPLS-TP transport;
Fig. 36 is a user data packet format that is received/sent in the transport network composed with packet transport node of present invention;
Fig. 37 is a routing protocol packet format that is received/sent in the transport network composed with packet transport node of present invention;
Fig. 38 is a user data packet format that is received/sent in the transport network composed with the MPLS-TP transport node in the third embodiment;
Fig. 39 is a routing protocol packet format that is received/sent in the transport network composed with the MPLS-TP transport node in the third embodiment;

### DETAILED DESCRIPTION OF THE PREFERRED EMBODIMENTS

### First Embodiment

Hereafter, first embodiments of the present invention will be described in detail with reference to drawings.

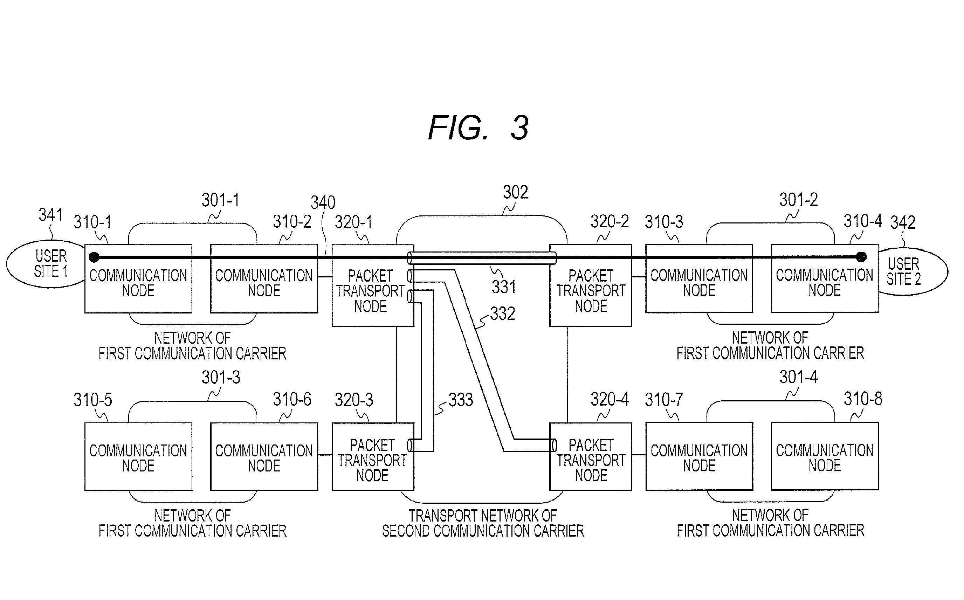

Fig.3 is an example of a transport network composed with packet transport node of the present invention. The transport network interworks networks which are geographically distant.

In Fig.3, there are a first communication carrier and second communication carrier and four networks 301-1, 301-2, 301-3, 301-4 which are geographically distant are interworked via a transport network 302 of second communication carrier

A network of the first communication carrier 301 includes a communication node 310-1, a communication node 310-2, a communication node 310-3, a communication node 310-4, a communication node 310-5, a communication node 310-6, a communication node 310-7, and a communication node 310-8. The communication node 310 is implemented a communication protocol which composes logical paths 340 to be a passage of data between an edge and the other edge of the network by using a routing protocol. The logical path 340 is set between the communication node 310-1 to accommodate a user site 1-340 which is used by users contracted with the first communication carrier and the communication node 310-4 to accommodate a user site 2-340 which is used by users contracted with the first communication carrier. In Fig.3, there is one logical path, but the logical path is set every contract user in the network of the first carrier. Therefore users who contract with the first communication carrier can use a high security communication service. Data packet inputted from user site to the network is added a logical path header to identify a logical path at the communication node 310. The communication node 310 specifies forwarding destination based on the logical path header.

The routing protocol used in the network of the first communication carrier notifies logical path ID to identify a logical path from starting point to ending point of the logical path. So the communication node 310-1 notifies that which a logical path of logical path ID would be established to the communication node 310-2, the communication node 310-3, and the communication node 310-4 upon establishing logical path to forward data in a direction from the communication node 310-1 to the communication node 310-4. Upon receiving a routing protocol packet to notify the logical path ID from the communication node 310-1, the communication node 310-2 sets the logical path ID assigned with the routing protocol received from the communication node 310-1. The communication node 310-2 notifies the logical path ID by sending the routing protocol packet to the communication node 310-3 which is on a passage of the logical path. Thus the logical path among End-to-End is established.

The communication node 310 composed the network of the first communication carrier use the routing protocol. Therefore in the network of the first communication carrier, there are user data packet 100 and routing protocol packet 200 as described in Fig. 1 and Fig. 2. The user data packet includes a MAC header 111 which corresponds to Layer 2 of OSI (Open Systems Interconnection) reference model, a logical path header 112 to identify a transport logical path in the transport network and payload 113. An ID to identify a logical path 340 is held in the logical path header 112.The MAC header includes a destination MAC address 121 to identify a destination, a source MAC address 122 to identify a source, and a type 123 to identify a protocol of a header to next to the MAC header 111.

The routing protocol packet 200 includes a MAC header 111 which corresponds to Layer 2 of OSI (Open Systems Interconnection) reference model and routing information 211. In the communication protocol 1, the header 112 to identify a logical path is not added to the routing protocol packet 112.

A transport network of the second communication carrier 302 includes a packet transport node 320-1, a packet transport node 320-2, a packet transport node 320-3, and a packet transport node 320-4. The packet transport node 320 is implemented a communication protocol which composes transport logical paths to be a passage of data between an edge and the other edge of the transport network 302. As the communication protocol of the transport network 302, for example, a communication protocol which composes transport logical path by using routing protocol and a communication protocol which composes transport logical path by using a network management system to be set explicitly a route of the transport logical path to the packet transport node 320 can be applied.

In an example of Fig. 3, to interconnect the network of the first communication carrier 301, a transport logical path 331 to connect between the packet transport node 320-1 which accommodates the network of the first communication carrier 301-1 and the packet transport node 320-2 which accommodates the network of the first communication carrier 301-2, a transport logical path 332 to connect between the packet transport node 320-1 which accommodates the network of the first communication carrier 301-1 and the packet transport node 320-3 which accommodates the network of the first communication carrier 301-3, and a transport logical path 333 to connect between the packet transport node 320-1 which accommodates the network of the first communication carrier 301-1 and the packet transport node 320-4 which accommodates the network of the first communication carrier 301-4 are set in the transport network 302. The packet inputted from the network of the first carrier to the network of the second carrier is forwarded by using any one of the transport logical path 331, 332, 333. Therefore in the network of the second carrier, a high security communication is achieved. In the network 302 of the second carrier, user data which is transferred with logical path 340 which connects between the user site 1 341 and user site 2 342 are needed to forward with the transport logical path 331 of the transport network 302. This is because that if the user data which is transferred with logical path 340 is forwarded to the other transport logical path of the transport network 302, the high security communication is not achieved.

In an example of Fig.3, there is one logical path 340 of the first communication carrier to be accommodated the transport logical path 331 which is set to the transport network 302, but sometimes a plurality of the logical path of the first communication carrier are set to a same transport logical path 331.

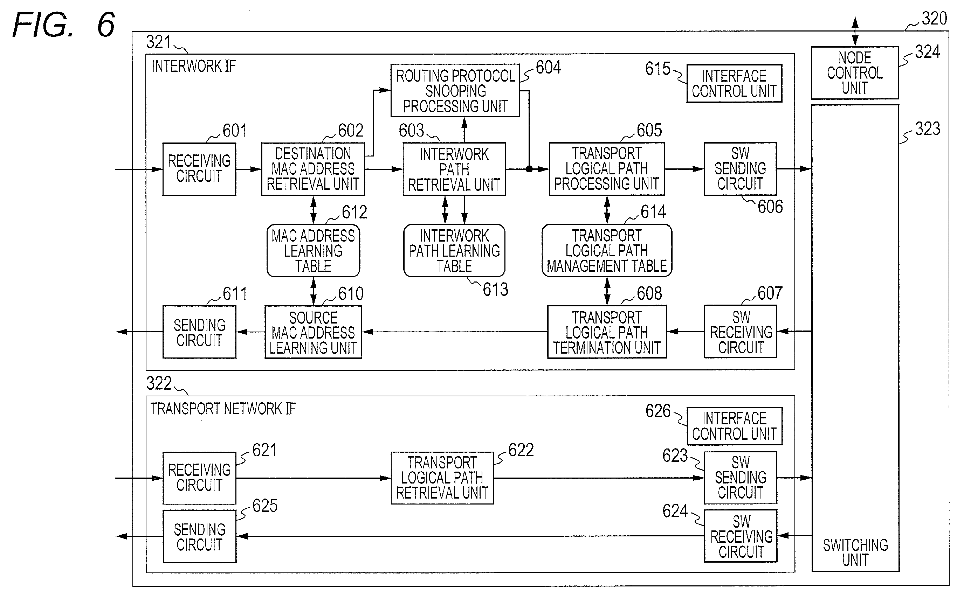

Fig.6 is a configuration of a packet transport node of the present invention. The packet transport node 320 includes at least one switching unit 323, at least a node control unit 324, at least a transport network IF 322, at least an interwork IF 321. The switching unit 323, the node control unit 324, the transport network IF 322, and the interwork IF 321 are connected with each other.

The node control unit 324 controls an interface for maintenance of a network administrator, the interwork IF 321, the transport network IF 322, and the switching unit 323. The switching unit 323 specifies a forwarding destination of data and transmits data to appropriate interwork IF 321 or transport network IF 322. The transport network IF 322 is connected to the other packet transport node 320 which composes the transport network 302.

The transport network IF 322 is connected to the other packet transport node 320 which composes the transport network 302. The transport network IF 322 includes a receiving circuit 621, a transport logical path retrieval unit 622, a SW sending circuit 623, a SW receiving circuit 624, a sending circuit 623, and an IF control unit 626.

The IF control unit 626 is connected to the node control unit 324 and includes a function for setting information notified from the node control unit 324 to each component of transport network IF 322 and a function for reading out the setting information to be set to each component and notifying to node control unit

The receiving circuit 621 receives packets from the other packet transport node 320 in the transport network. The sending circuit 625 sends the packet to the other packet transport node 320 in the transport network.

The transport logical path retrieval unit 622 confirms that the received packet is to be received at the interface itself. The packet which is not to be received is discarded at the transport logical path retrieval unit 622. The transport logical path retrieval unit 622 includes a transport logical path management table, compares the transport logical path ID obtained from the transport logical path header 402 of the received packet and the transport logical path ID set to the transport logical path management table and transmits the packet to the SWsending circuit 626 if the transport logical path ID obtained from the transport logical path header 402 of the received packet and the transport logical path ID set to the transport logical path management table are corresponded. If the transport logical path ID obtained from the transport logical path header 402 of the received packet and the transport logical path ID set to the transport logical path management table are not corresponded, the received packet is discarded.

The SWsending circuit 623 sends packets to the switching unit 323. The SWreceiving circuit 624 receives packets from the switching unit 323.

The interwork IF 321 is connected to the communication node of the other communication carrier. Furthermore, the interwork IF 321 has a function for learning a destination based on the packet received from the communication node of the other communication carrier and a function for adding a transport logical path header to the received packet to be used in the transport network.

The interwork IF 321 includes a receiving circuit 601, a destination MAC retrieval unit 602, an interwork path retrieval unit 603, a routing protocol snooping processing unit 604, a transport logical path processing unit 605, a SWsending circuit 606, a SWreceiving circuit 607, a transport logical path termination unit 608, a source MAC learning unit 610, a sending circuit 611, and an IF control unit 615.

The IF control unit 615 is connected to the node control unit 324 and has a function for setting information notified from the node control unit 324 to the each component of the interwork IF 321, readin out information set to each component, and notifying the information to the node control unit 324.

The receiving circuit 601 receives packets from the communication node 310 of the other communication carrier.

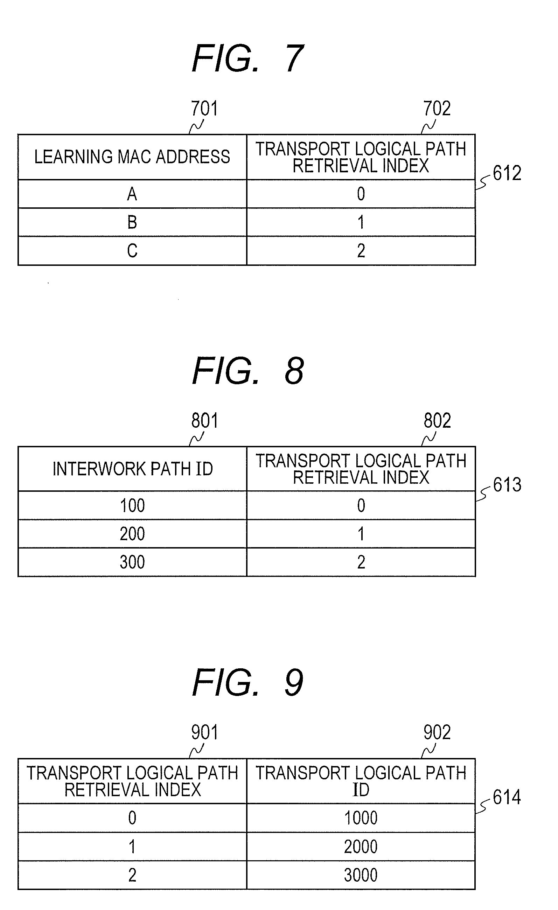

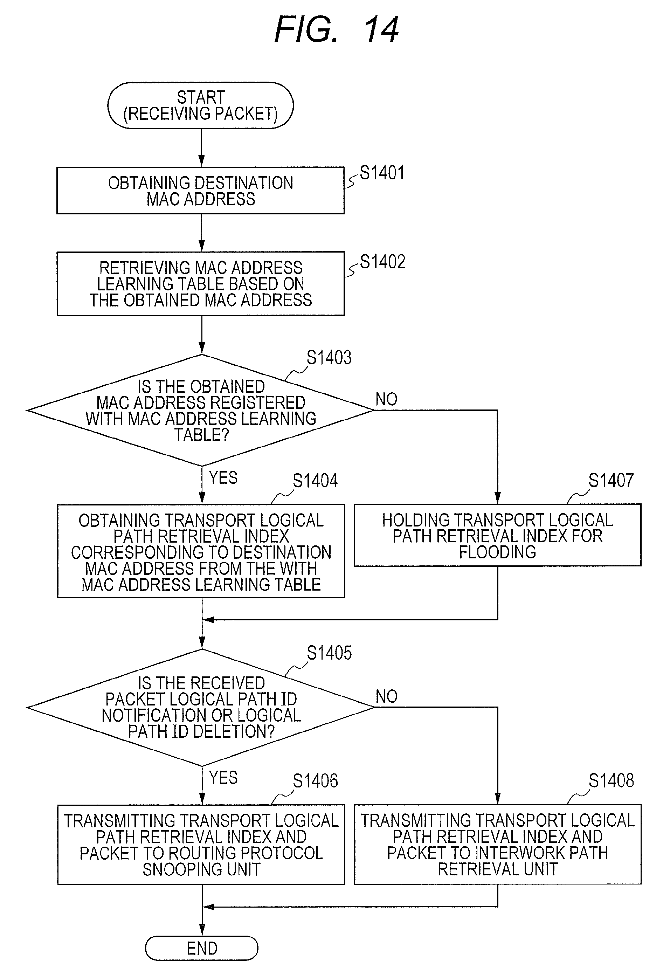

The destination MAC retrieval unit 602 obtains a destination MAC address 121 from the MAC header 111 of the received packet upon receiving the packet and confirms whether the MAC address of the received packet is registered in the MAC learning table 612 or not. Operations of the destination MAC retrieval unit 602 at the time of receiving packets will be described with refer to Fig.7 and Fig.14.

Fig.7 shows a configuration of MAC learning table 612 which the destination MAC retrieval unit 602 and the source MAC learning unit 610 retrieves at the time of receiving packets. In Fig. 7, the MAC learning table have three entries to register, but can register more than three entries without reference to an advantage of the present invention. The MAC learning table 612 includes the learning MAC address 701 and the transport logical path retrieval index 702. The transport logical path retrieval index 702 is IDs to manage a transport logical path of the packet transmitted from the transport network 302 in itself. The learning MAC address 701 is the source MAC address of the packet. The interwork IF 321 collects these setting value and these setting value is registered autonomously. The packet transport node 320 learns that the communication node of the source MAC address exists beyond the transport logical path of the transport network which is specified by the transport logical path retrieval index by registered at the table with relating the source MAC address 701 to the transport logical path retrieval index 702. A process of registering at MAC learning table as well hereinafter will be described in detail.

Fig. 14 is a flow chart of an operation of the destination MAC retrieval unit 602 at the time of receiving packets. Upon receiving a packet, the destination MAC retrieval unit 602 obtains a destination MAC address 121 based on the MAC header 111 of the received packet (S1400). The destination MAC retrieval unit 602 retrieves the learning MAC address of the MAC learning table 612 based on the obtained destination MAC address (S1402). The destination MAC retrieval unit 602 judges whether the obtained MAC address has registered with the MAC address learning table or not (S1403). If the obtained MAC address has registered at the MAC learning table 612, the destination MAC retrieval unit 602 obtains a transport logical path retrieval index corresponding to the destination MAC address from the MAC learning table 612(S1404). If the obtained MAC address has not registered at the MAC learning table 612, the destination MAC retrieval unit 602 holds a transport logical path retrieval index for flooding which shows the packet should be copied and forwarded to all transport logical path to be registered at the interwork IF (S1407).

The destination MAC retrieval unit 602 judges a type of the received packet. The destination MAC retrieval unit 602 judges that whether the received packet is a user data packet 100 or a routing protocol packet 200. If the received packet is the routing protocol packet 200, the destination MAC retrieval unit 602 judges that whether the packet is a logical path ID notification message to communicate data between the communication node310 of the first communication carrier or a logical path ID deletion message to communicate data between the communication node 310 of the first communication carrier (S1405). If the received packet is the logical path ID notification message or the logical path ID deletion message, the destination MAC retrieval unit 602 forwards the transport logical path retrieval index 702 and the received packet to the routing protocol snooping processing unit 604 (S1406).If the received packet is neither the logical path ID notification message nor the logical path ID deletion message, the destination MAC retrieval unit 602 forwards the transport logical path retrieval index 702 and the received packet to the interwork path retrieval unit(S1408). By referring to a type of MAC header 123, the destination MAC retrieval unit 602 can confirm that the received packet is a user data packet 100 or a routing protocol packet 200. If the received packet is the routing protocol packet, the destination MAC retrieval unit 602 can confirm contents of message referring to the routing information.

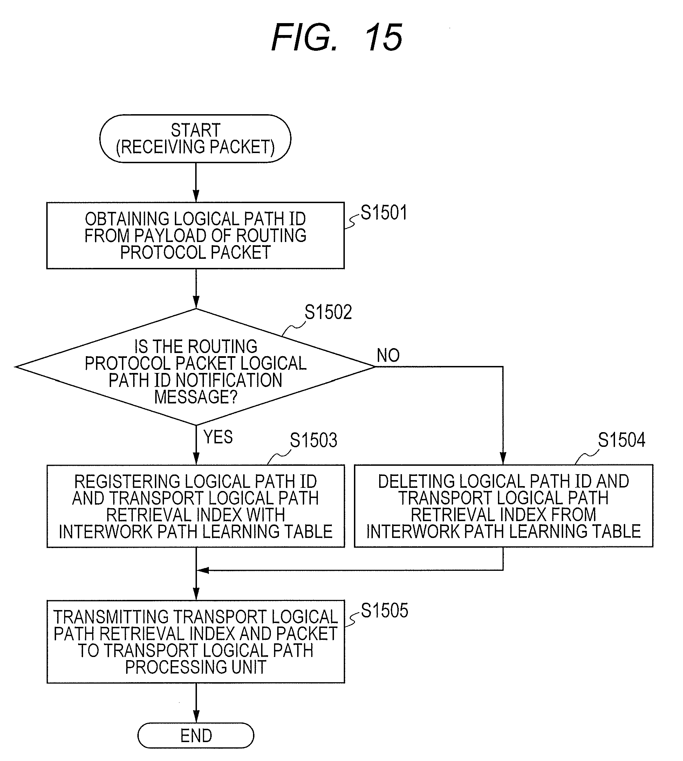

The routing protocol snooping processing unit 604 collects a logical path ID used in the network of the first communication carrier and a message type of the packet based on the routing information 211 of the routing protocol packet and registers/deletes information of the interwork path learning table. An operation of the routing protocol snooping processing unit 604 at the time of receiving packets will be described with refer to Fig.8 and Fig.15.

Fig.8 shows a configuration of an interwork path learning table 613 which is retrieved at the time of receiving packet at the routing protocol snooping processing unit 604 and the interwork path retrieval unit 603 each. In Fig.7, the interwork path learning table 613 have three entries to register, but can register more than three entries without reference to an advantage of the present invention. The interwork path learning table 613 includes an interwork path ID 801 and a transport logical path retrieval index 802.

In Fig. 15, a procedure of registering the interwork path ID 801 and the transport logical path retrieval index 802 at the interwork path learning table 613.

The routing protocol snooping processing unit 604 obtains a logical path ID used in the network of the first communication carrier from the routing information 211 upon receiving the routing protocol packet 200 from the destination MAC address retrieval unit 602 (S1500). The routing protocol snooping processing unit 604 confirms that whether the packet is a logical path ID notification message or a logical path ID deletion message (S1502). The routing protocol snooping processing unit 604 can confirm a type of a message referring the routing information. If the received routing protocol packet 200 is the logical path ID notification message, the routing protocol snooping processing unit 604 registers the logical path ID obtained from the received packet as an interwork path ID 207 of the interwork path learning table 613 and registers the transport logical path retrieval index notified from the destination MAC address retrieval unit 602 as a transport logical path retrieval index 802 of the interwork path learning table 613 (S1503). By the step S1503, the packet transport node can correlate the logical path used in the network of the first communication carrier to the transport logical path used in the transport network of the second communication carrier on one-on-one.

If the received routing protocol packet 200 is the logical path ID deletion message, the routing protocol snooping processing unit 604 retrieves the interwork path learning table 613 based on the logical path ID obtained from the received packet. If the interwork path ID 801 which is same as the obtained logical path ID has already registered at the table, the routing protocol snooping processing unit 604 deletes, the transport logical path retrieval index 802 corresponding to the registered interwork path ID 801 at the interwork path learning table 613(S1504). By the step S1504, the routing protocol snooping processing unit 604 can delete the logical path which would not be used in the network of the first communication carrier so that there is no unnecessary entry at the interwork path learning table 613.

After processing any one of the S1503 or the S1504, the routing protocol snooping processing unit 604 forwards the transport logical path retrieval index and the routing protocol packet 200 to the transport logical path retrieval index to the transport logical path processing unit 605.

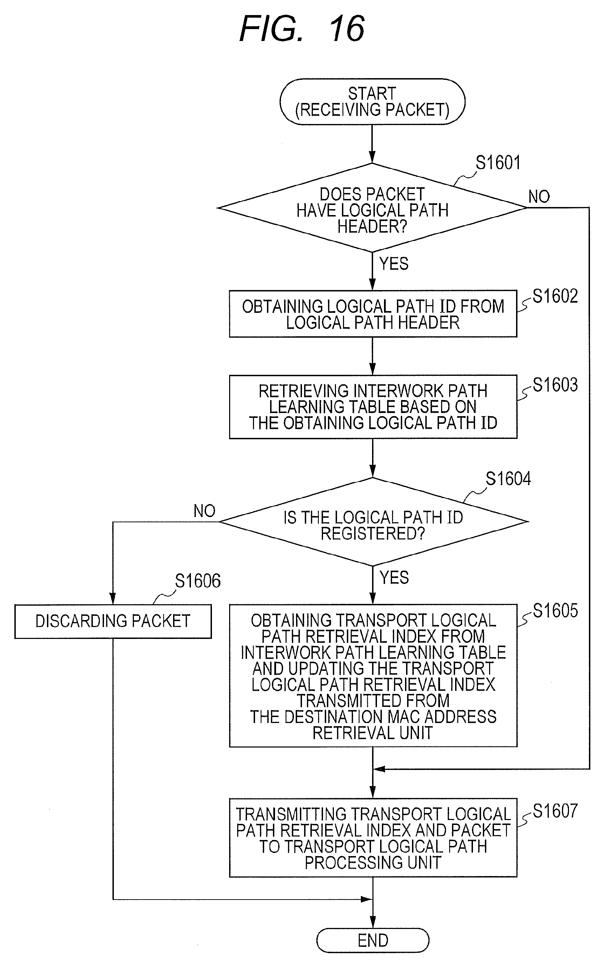

Upon receiving a user data packet 100, the interwork path retrieval unit 603 obtains the logical path ID from the logical path header 112, retrieves the interwork path learning table 613 based on the obtained logical path, and obtains the transport logical path retrieval index. An operation of the interwork path retrieval unit 603 at the time of receiving a packet will be described with refer to Fig.8 and Fig.16.

Upon receiving a user packet 100 or a routing protocol packet 200 from the destination MAC address retrieval unit, the interwork path retrieval unit 603 judges whether the received packet includes the logical path header 112 or not(S1601). If the received packet is the user data packet 100 included in the logical path header 112, the interwork path retrieval unit 603 obtains the logical path ID from the logical path header 112(S1602). If the received packet is the routing protocol packet 200, a processing moves to step S1607. The interwork path retrieval unit 603 retrieves the interwork learning table based on the obtained logical path ID (S1603). The interwork path retrieval unit 603 confirms that whether the obtained logical path ID has registered at the interwork path ID 801 of the interwork path learning table613 or not (S1604).

If the obtained logical path ID has registered at the interwork path learning table 613, the interwork path retrieval unit 603 obtains the transport logical path retrieval index 802 corresponding to the logical path ID. At this time, the interwork path retrieval unit 603 updates the transport logical path retrieval index 702 notified from the destination MAC retrieval unit 602 to the transport logical path retrieval index 802 obtained from the interwork path learning table 613 (S1605).

Next, the interwork path retrieval unit 603 forwards the received packet and the transport logical path retrieval index 802 which is updated at the interwork path retrieval unit 603 to the transport logical path processing unit (S1607). If the received packet is the routing protocol packet, the interwork path retrieval unit 603 forwards the received packet and the transport logical path retrieval index 702 obtained from the MAC destination address retrieval unit 602 to the transport logical path processing unit (S1607).

If the received packet is the user data packet, but the obtained packet has not registered at the interwork path learning table, the interwork path retrieval unit 603 discards the user data packet 100 and finishes the processing because there is a possibility of data misdelivery to unset path (S1606).

By the operation of the step S1605, if the destination MAC address of the user data packet 100 is a multicast address or a broadcast address which show the packet should be copied and forward to a plurality of destination, the packet transport node can forward packets to a specified transport logical path set in the transport network of the second carrier based on the logical path header 112. Furthermore, if the destination MAC address of the user data packet to be forwarded with logical path showed in Fig. 3 is a multicast address or broadcast address, the packet can be forwarded by using the transport logical path 331 of the second communication carrier.
(The packet dose not forwarded to the transport logical path 332 and 333) . In addition, if the destination MAC address 121 of the user data packet 100 is a unicast address which shows a single destination, but the destination MAC address has not registered at the MAC learning table 612, the packet transport node can forward the packet to a selected transport logical path.

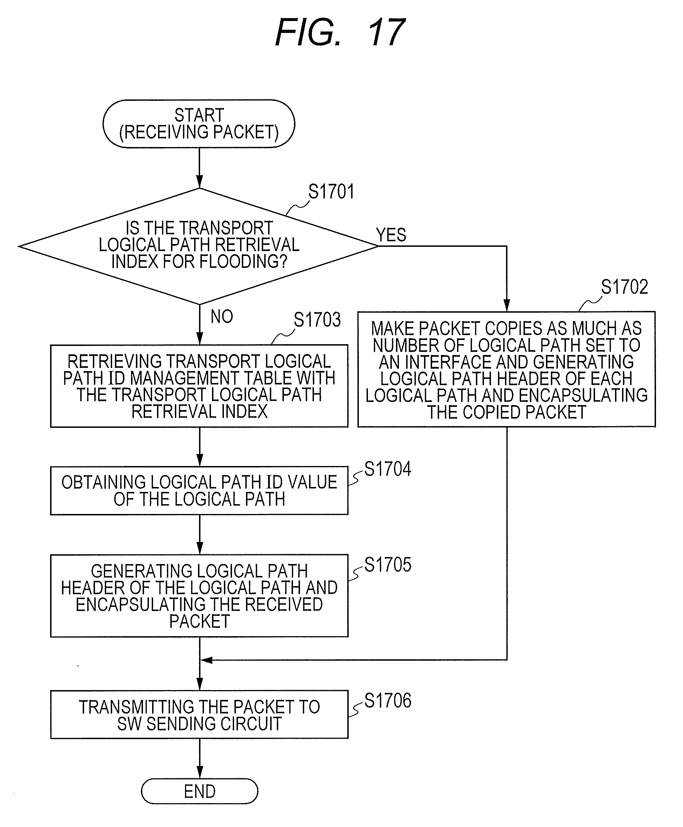

The transport logical path processing unit 605 is a processing unit to be a start point of a transport logical path of the communication protocol used in the transport protocol of the second communication carrier. Upon receiving the user data packet 100 or the routing protocol packet 200, the transport logical path processing unit 605 specifies the transport logical path to be forwarded the packet in the transport network 302 and adds the transport logical path header to the received packet. An operation of the transport logical path processing unit 605 at the time of receiving packets will be described with refer to Fig.9 and Fig.17.

Fig.9 shows a configuration of the transport logical path management table 614 which are retrieved upon receiving packet at the transport logical path processing unit 605 and the transport logical path termination unit 608. The transport logical path management table 614 includes the transport logical path retrieval index 901 and transport logical path ID. In Fig.9, the transport logical path management table 614 has three entries to be register, but can register more than three entries without reference to an advantage of the present invention.
The second communication carrier determines the logical path to provide the first communication carrier in transport network 302 before starting to provide service and registers preliminarily the transport logical path retrieval index 901 that is a index of the logical path managed in the packet transport node and the determined logical path of the transport network 302 as transport logical path ID used in the transport network of the second communication carrier. Fig.9 shows a registration content of the transport logical path management table 614 of the interwork IF 321 of the packet transport node 320-1. In an example of Fig.3, three logical paths are set to packet transport node 320-1. There are the logical path 331 to be connected to the packet transport node 320-2, the logical path 333 to be connected to the packet transport node 320-3, the logical path 332 to be connected to the packet transport node 320-4. These paths are registered as transport logical path retrieval index 0, 1, 2 and logical path ID 1000, 2000, 3000 in this order. The information of entries of the table may be registered demonstratively every packet transport node by a network administrator of the second communication carrier via the network control unit 324 or may be registered autonomously by using the routing protocol between the packet transport nodes 320 in the transport network 302.

Fig. 17 shows an operation flow chart of the transport logical path processing unit 605.

Upon receiving a packet and the transport logical path retrieval index, the transport logical path processing unit 605 judges whether the received transport logical path retrieval index is a index for flooding or not (S1701). If the received packet is not the index for flooding, the logical path processing unit 605 retrieves the transport logical path management table 614 based on the obtained transport logical path retrieval index (S1703). The logical path processing unit 605 obtains the corresponding logical path processing unit 605 from the transport logical path management table 614 (S1704). The logical path processing unit 605 creates the transport logical path header of the obtained transport logical path ID and encapsulates by adding the header to a header of the received packet (S1705).

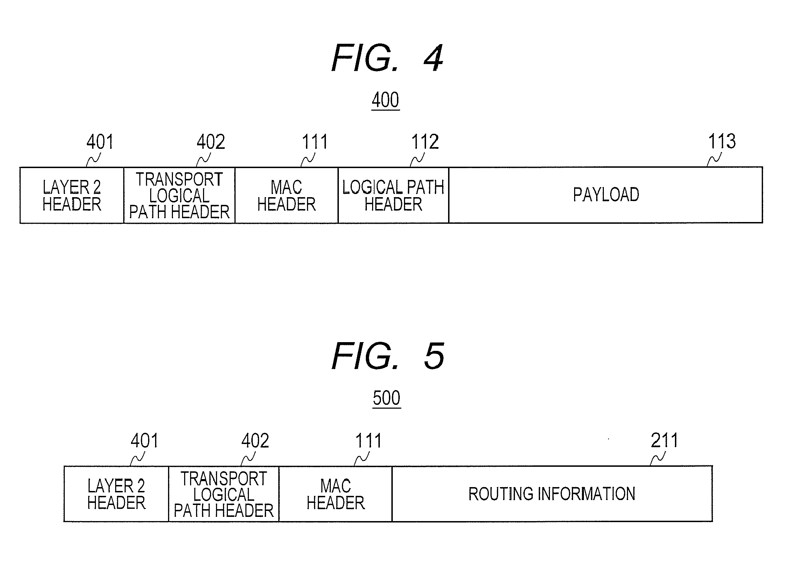

Fig.4 and Fig.5 show a format of encapsulated packet. Fig.4 shows the format 400 of a packet that a user data packet is encapsulated with the communication protocol of the network of the second communication carrier. Fig.5 shows the format 500 of a packet that a routing protocol packet is encapsulated with the communication protocol of the network of the second communication carrier. The transport logical path header 402 is added to an external side of the MAC header 111 of the received packet. A Layer 2 header 400 that is putted external side of the transport logical path header 402 is a header which is depended on Layer 2 protocol of OSI reference model used in the transport network of the second communication carrier. The Layer 2 header 400 is added at the sending circuit 625 of the transport network IF 322 and deleted at the receiving circuit 621 of the transport network IF 322.

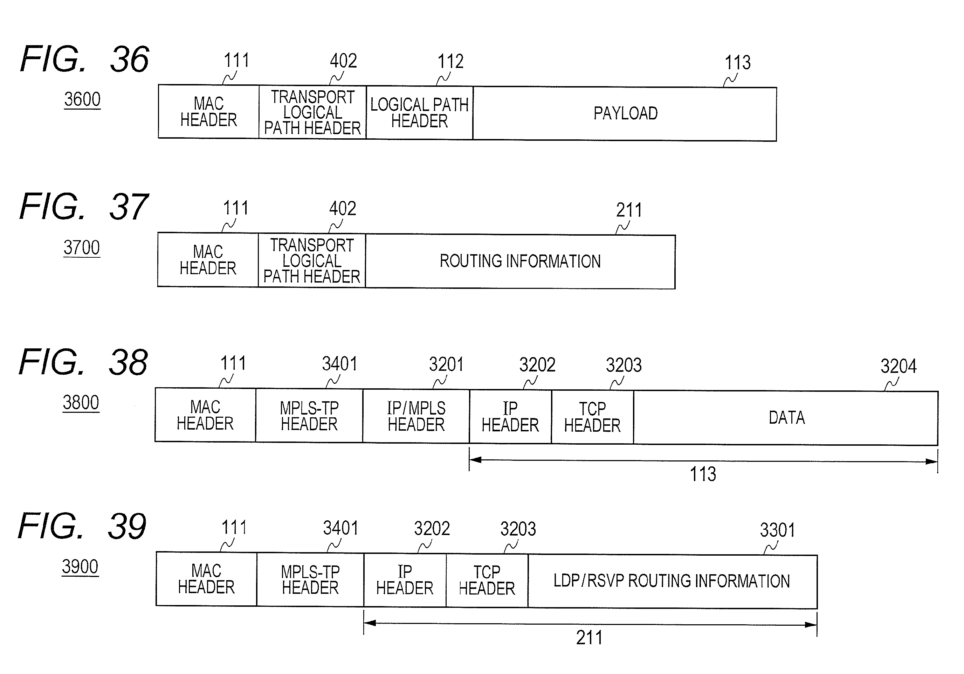

If the Layer 2 protocol used in the transport network of the second communication carrier is Ethernet, the MAC header 111 used in the first communication carrier can be used. Fig. 3 6 and Fig.37 show packet formats in case of using the MAC header 111 used in the first communication carrier. Fig.36 shows the packet format 3600 at the time of forwarding the user data packet 100 with the transport network of the second communication carrier. The transport logical path 402 is added to between MAC header 111 and the logical path 112 of the received user packet. Fig. 37 shows the packet format 3700 at the time of forwarding the routing protocol packet 200 with the transport network of the second communication carrier. The transport logical path 402 is added to between MAC header 111 and the routing information 211 of the received user packet. By using the MAC header 111 used in the first communication carrier, an overhead can be reduced. Hereinafter, in the explanation of embodiments, Fig.4 and Fig. 5 are used as a packet format used in the transport network of the second communication carrier, but there are same advantages in case of using the packet format of Fig.36 and Fig. 37.

If the transport logical path retrieval index of the received packet at the transport logical path processing unit is for flooding, the logical path processing unit 605 makes copies as much as number of the transport logical path to be set to the interface, creates the transport logical path header for each transport logical path, and encapsulates the copied packets (S1703).

The logical path processing unit 605 forwards to the packet which is encapsulated with the communication protocol of the second communication carrier to the SWsending circuit 606 (S1706).

The SWsending circuit 606 forwards the packet to the switching unit 123. The SW receiving circuit 607 receives the packet from the switching unit 123.

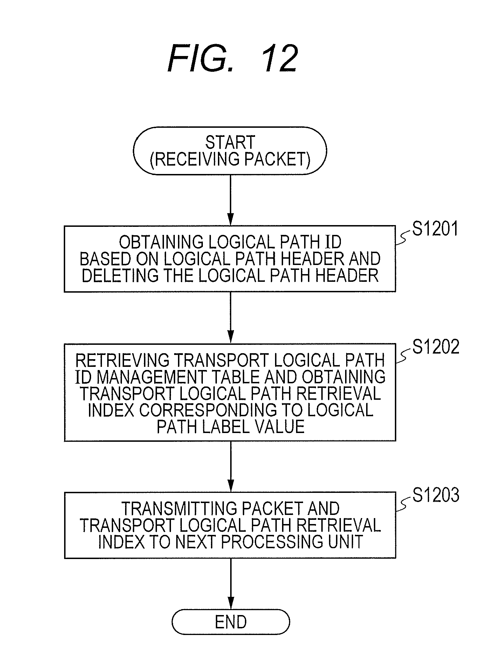

The transport logical path termination unit 608 terminates the transport logical path of the communication protocol used in the transport network of the second communication carrier. The transport logical path termination unit 608 obtains the transport logical path ID to specify the transport logical path used in the transport network of the second communication carrier based on the transport logical path header 402 of the received packet and obtains the transport logical path retrieval index managed at the interwork IF 321 based on the transport logical path management table 614. An operation of the transport logical path termination unit 608 at the time of receiving packet will be described with refer to Fig.9 a d Fig. 12.

The transport logical path termination unit 608 obtains the transport logical path ID based on the transport logical path header 402 upon receiving the user data packet 400 or the routing protocol packet 500. The transport logical path termination unit 608 deletes the transport logical path header 402 of the received packet (S1201). The transport logical path termination unit 608 retrieves the transport logical path management table 614 based on the obtained transport logical path ID and obtains the transport logical path retrieval index 901 related to the transport logical path ID corresponding to the obtained logical path ID (S1202). The transport logical path termination unit 608 forwards the received packet and the transport logical path retrieval index to the next processing unit (S1203).

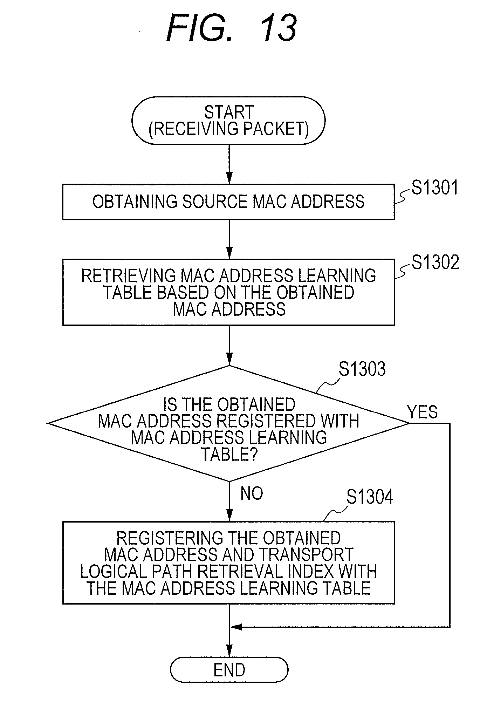

The Source MAC learning unit 610 registers correspondence information between the source MAC address 122 of the packet which is received from or sent to the network of the first communication carrier and the transport logical path retrieval index managed at the interwork IF 321 at the MAC learning table 612. An operation of the source MAC learning unit 610 at the time of receiving packet will be described with refer to Fig. 7 and Fig.13.

The source MAC learning unit 610 obtains the source MAC address 122 based on the MAC header 111 of the received packet upon receiving the packet (S1301). The Source MAC learning unit 610 retrieves the MAC learning table 612 based on the obtained source MAC address 122 (S1302). The source MAC learning unit 610 confirms whether the source MAC address is registered at the table or not (S1303). If the source MAC address has not registered at the MAC learning table 612, the source MAC learning unit 610 registers correspondence information between the obtained MAC address and the transport logical path retrieval index at the MAC learning table 612 (S1304). If the source MAC address has already registered at the MAC learning table 612, the source MAC learning unit 610 finishes the processing.

The source MAC learning unit 610 registers correspondence information between the source MAC address 122 and the transport logical path retrieval index 702 of the received packet with the MAC learning table 612. Therefore, if the packet received from the communication node 310 of the network of the first communication carrier does not include the logical path header, the packet transport node 320 can forward the packet to a specified transport logical path to be set by the second communication carrier.

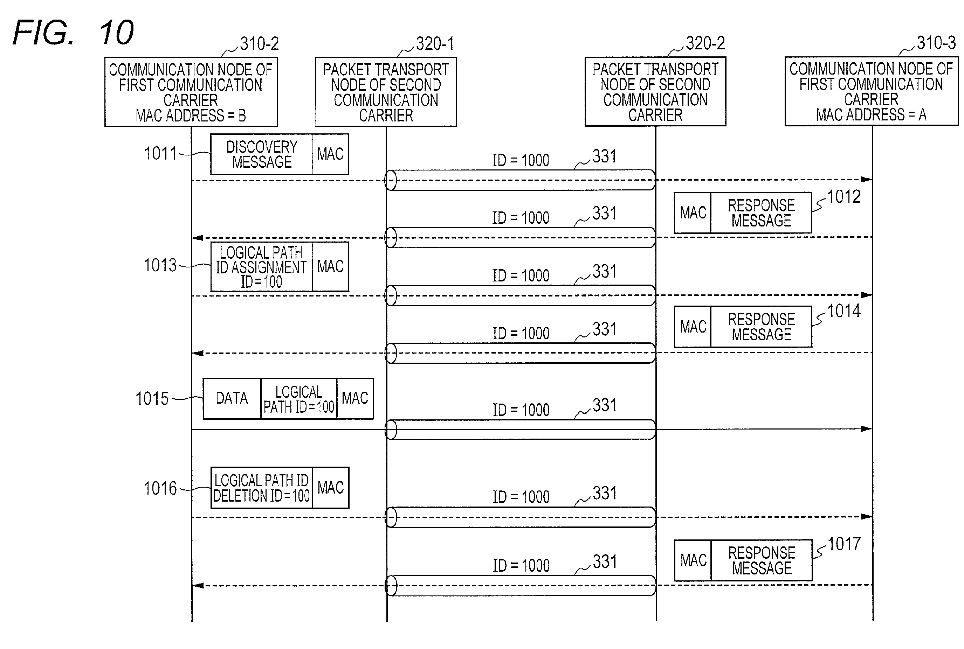

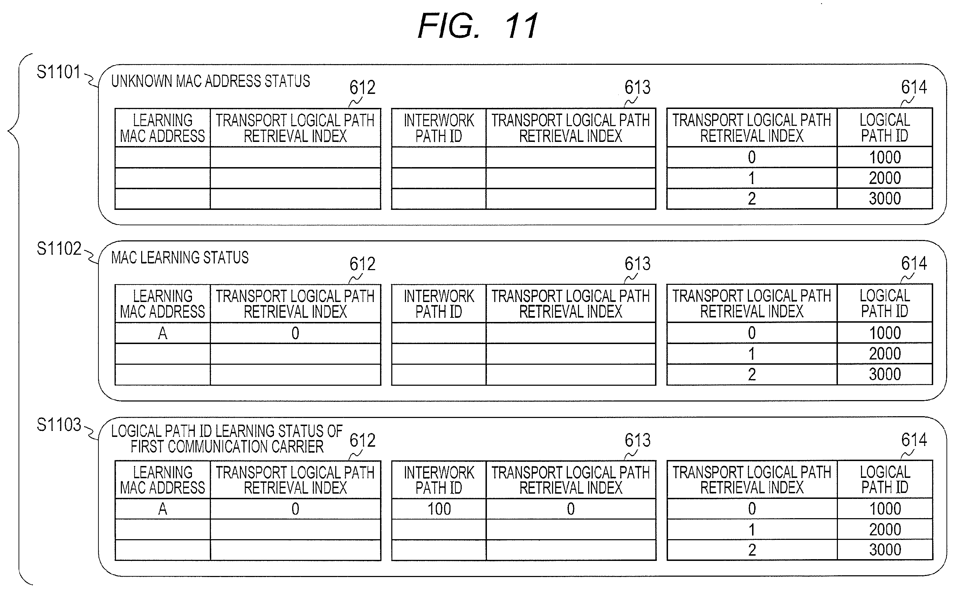

Fig. 10 and Fig. 11 show a procedure of the packet transport node 320 learning the source MAC address and the logical path ID used in the first communication carrier.

Fig.10 shows a sequence from sending/receiving data after setting the logical path between the communication node 310-2 and the communication node 310-3 to deleting the logical path. Fig. 11 shows the MAC learning table 612, interwork path learning table 613, and transport logical path management table 614 of the packet transport node 320-1.

The S1101 shows an initial status to be set only the transport logical path to be provided to the network of the first communication carrier in the transport logical path management table 614 of the packet transport node 320 of the transport network of the second communication carrier. At this time, the transport logical path management table 614 includes information of transport logical path 331, 332, and 333 to be set in the transport network 302 as the transport logical path retrieval index 0, the transport logical path ID 1000, the transport logical path retrieval index 1, the transport logical path 2000, the transport logical path retrieval index 2, the transport logical path ID 3000.

When the second communication carrier begins to provide their network to the network of the first communication carrier, the communication node 310-2 sends a retrieval message 1001 to confirm that whether there is a communication node using the same communication protocol in the network. A broadcast address or multicast address is used as the MAC address of the retrieval message 1101 to transmit the packet to all of the communication nodes 310 in the network. Upon receiving the retrieval message 1101, the packet transport node 320-1 copies the packet and forwards to the packet to all of the transport logical path (331,332,and 333) registered at the interwork IF 321 because the destination MAC address is the broadcast address (multicast address) and the message dose not have the logical path header 112.

Upon receiving the retrieval message 1011, the communication node 310 sends a response message 1012 to the communication node 310-2. Upon receiving the response message 1012, the packet transport node 320-1 obtains the transport logical path retrieval index 0 corresponding to the logical path ID 1000 of the transport logical path 331 of the transport network from which the response message is transmitted from the transport logical path management table 614. The packet transport node 320-1 obtains the MAC address A of the communication node 310-3 from a location of the source MAC address 112 of the MAC header 111 and registers the MAC address A and the transport logical path retrieval index 0 with the MAC learning table 612 (S1102). That is registered by the processing of the source MAC learning unit described in the Step 1304 of Fig.13 because the source MAC address A has not registered at the MAC learning table 612 of the packet transport node 320-1. The MAC response message 1012 is forwarded from the packet transport node 320-1 to the communication node310-2.

The communication node310-2 sends the logical path ID assignment message 1013 to the communication node320-3 to set the logical path used in the network of the first communication carrier. The logical path ID assignment message 1013 to notify the logical path used on the network of the first communication carrier is sent from the communication node 320-2 to the communication node 310-3. For the destination MAC address of the logical path ID assignment message 1013, "A" to specify the communication node 310-3 is added and in the routing information 211, logical path "100" to be used is described. Upon receiving the logical path ID assignment message , the destination MAC retrieval unit of the packet transport node 320-1 obtains "A" as the destination MAC address 121 of the received packet from the MAC header 111 and retrieves the MAC learning table 612 based on the MAC address "A". This has led to obtain the transport logical path retrieval index 0 from the MAC learning table 612.

If the received packet is the logical path ID assignment message, the routing protocol snooping unit 604 of the packet transport node 320-1 obtains the logical path ID "100" to be set by the network of the first communication carrier from the routing information 211 and the packet transport node 320-1 registers the logical path ID "100" and the transport logical path retrieval index "0" with the interwork path learning table 613(1103). In this way, the packet transport node 320-1 can relate the logical path "100" used in the network of the first communication carrier to the transport logical path "1000" used in the transport network of the second communication carrier one-on-one. The transport logical path retrieval index of the logical path ID assignment message is specified to "0" based on the destination MAC address. Therefore, the transport logical path retrieval index is encapsulated with the transport logical path header 402 included in the transport logical path ID "1000" and forwarded from the packet transport node 320-1 to the transport network 302.

Upon receiving the logical path ID assignment message 1013 from the transport network 302, the communication node 310-3 learns that the user data packet 100 forwarded from the communication node 310-2 has the logical path ID "100" of the logical path header 112.

Upon receiving the logical path ID assignment message 1013, the communication node310-3 sends the response message to the communication node 310-2. By the communication node 310-2 receiving the response message, the logical path of the logical path ID "100" between the communication node 310-2 and the communication node310-3 would be opened.

When the logical path has opened, the first communication carrier starts a communication service to a user who has a contract to the first communication carrier. After that, the user data packet 1015 is sent from the communication node 310-2.

Upon receiving the user data packet 1015, the packet transport node 320-1 obtains the logical path ID "100" based on the logical path header 112, retrieves the interwork path learning table 613 based on the logical path ID and obtains the transport logical path retrieval index 802 "0" corresponding to the logical path ID. The transport logical path retrieval unit retrieves the transport logical path management table based on the transport logical path retrieval index 802 and obtains the transport logical path ID "1000". The packet transport node 320-1 generates the transport logical path header 402 including the obtained transport logical path ID and encapsulates the received user data packet, and forwards the encapsulated user data packet from the packet transport node 320-1 to the transport network 302. In that way, the packet transport node can learn the logical path ID to be used at the communication node310-2 and the communication node 310-3 from the logical path ID assignment message. Therefore the packet transport node can forward the packet with the transport logical path of the transport logical path ID "1000" if the packet transport node receives the user data packet whose destination MAC address 121 is a multicast address or a broadcast address.

Next, a logical path ID deletion message which shows the logical path used in the network of the first communication carrier should be deleted is transmitted from the communication node 310-2 to the communication node 310-3. MAC address "A" which specifies the communication node 310-3 is added as the destination MAC address of the logical path ID deletion message and in the routing information of the logical path ID deletion message, the logical path ID "100" is included as the logical path ID to be deleted. Upon receiving the logical path ID deletion message, the packet transport node 320-1 obtains MAC address "A" as the destination MAC address of the received packet from the MAC header 111 and retrieves the MAC learning table 612 based on the MAC address "A". In this way, the packet transport node 320-1 obtains the transport logical path retrieval index "0" from the MAC learning table 612. Next, the packet transport node judges that the received packet is the logical path ID deletion message based on the routing information 211, obtains logical path ID "100" from the routing information 211 at the routing snooping processing unit 604, and deletes the logical path ID "100" and the transport logical path retrieval index "0" from the interwork path learning table 613 (S1102). The logical path ID assignment message 1013 is encapsulated with the transport logical path header 402 of the transport logical path ID "1000" and forwarded from the packet transport node 320-1 to the transport network 302 because the transport logical path retrieval index of the logical path ID assignment message 1013 is specified to "0" based on the destination MAC address.

Upon receiving the logical path ID deletion message 1016, the communication node310-3 learns that the logical path ID "100" set between the communication node310-2 and the communication node310-3 is disestablished.

Upon receiving the logical path ID deletion message 101, the communication node310-3 sends the response message 1017 to the communication node310-2. By receiving the response message at the communication node 310-3, the logical path ID 100 has disestablished.

LDP (Label Distribution Protocol) upstream label assignment of IP/MPLS and PPPoE are examples of the communication protocol used in the network of the first communication carrier described in the first embodiment. In the embodiment, there are two commnucation carriers, but the first communication carrier and the second communication carrier may be same communication carrier. The present invention can be applied when a second transport network which is forward packet with a second logical path transports a first network which forward packets with a first logical path and strides a plural bases.

Alternatively, depend on the routing protocol, the logical path ID requirement message (not shown in Fig.) is sent between the plurality of communication nodes 310 before sending the logical path ID assignment message 1913.

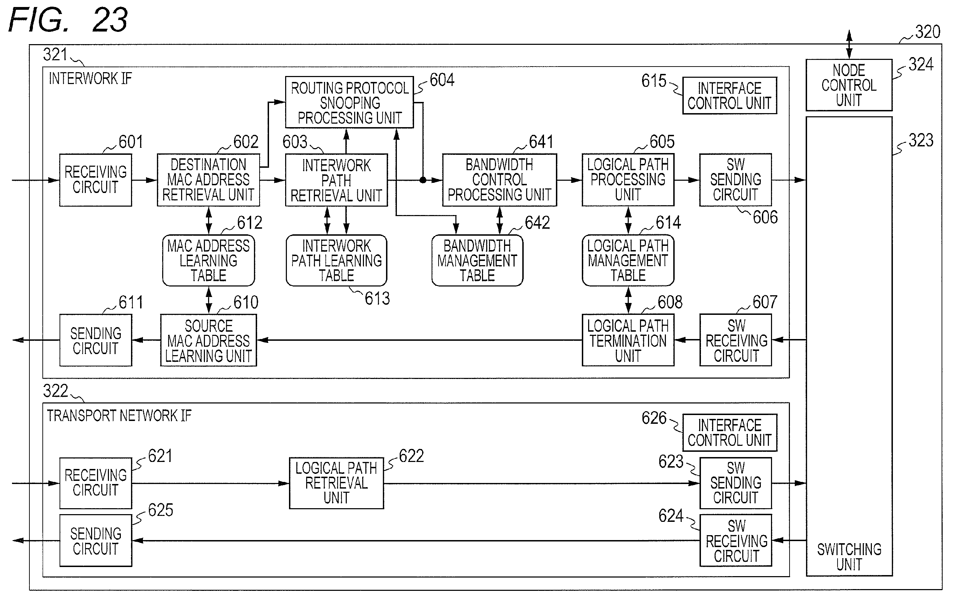

It will be described one of expanded example of the packet transport node 320 with refer to Fig.23, Fig.25, and Fig.26.

The fist communication carrier may be provide a service to guarantee a contract bandwidth for contracants of the network 301 as an additional value function. In case the first communication carrier which uses a communication protocol which sets logical paths with a routing protocol provides the service to guarantee a contract bandwidth, the first communication carrier may use a routing protocol which can guarantee bandwidth resource if the communication nodes 310 which establish the network 310. In these routing protocols, the routing information of the logical path notification message includes not only logical path ID but also bandwidth information to be guaranteed.

The first communication carrier which accommodates the network used said communication protocol needs to provide a service to guarantee a contract bandwidth for contractants of the transport network 102. At this time, a bandwidth control processing unit 641 is added to the interwork IF 121 of the packet transport node 320 of the second communication carrier.

The bandwidth control processing unit 641 monitors not to be flowed data which is exceeded to a bandwidth of contractants who uses the transport logical path of the transport network 302 into the transport network 302. If the data which is exceeded to a bandwidth of contractants who uses the transport logical path of the transport network 302 flows into the transport network 302, the bandwidth control processing unit 641 controls to discard the exceeded data, gives a increased disposal priority to the exceeded data, or gives a delay to the exceeded data.

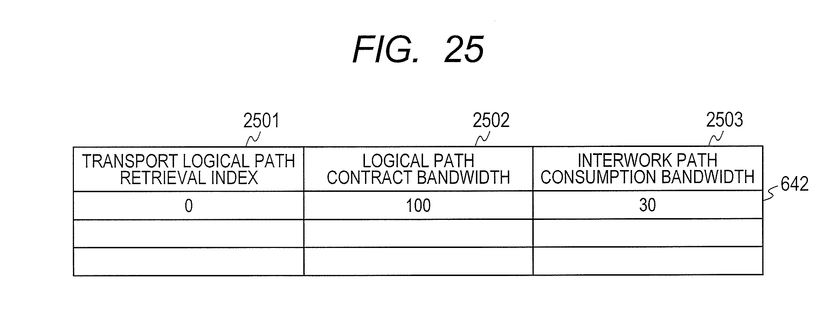

The bandwidth management table 642 manages bandwidth contract information of contractant who use the transport logical path of the transport network 302. Fig.25 shows an example of a configuration of the bandwidth management table. In the bandwidth management table 642, the packet transport node 320 includes the transport logical path retrieval index 2500 to manage the transport logical path ID of the transport network 302 in itself and the transport logical path contract bandwidth 2502 to hold the contract bandwidth of uses who contract to the transport logical path specified with the transport logical path retrieval index. Moreover, the bandwidth management table 642 includes the interwork path consumption bandwidth 2503 to manage the bandwidth of the logical path which is guaranteed by using the routing protocol among a plurality of the communication nodes 310.

In case, by the interwork path consumption bandwidth 2503, a plurality of the bandwidth guaranteed logical path are set in one transport logical path of the transport network 302 of the second communication carrier, the packet transport node 320 can know a bandwidth which the first communication carrier is using with comparing to a contract bandwidth which the first communication carrier contract to the second communication carrier. Therefore, the packet transport node 320 can alert to the network administrator of the second communication carrier when the bandwidth which the first communication carrier is using exceeds to a certain rate for said logical path contract bandwidth. Therefore the network administrator of the second communication carrier can alert the network administrator of the first communication carrier to increase said logical path contract bandwidth.

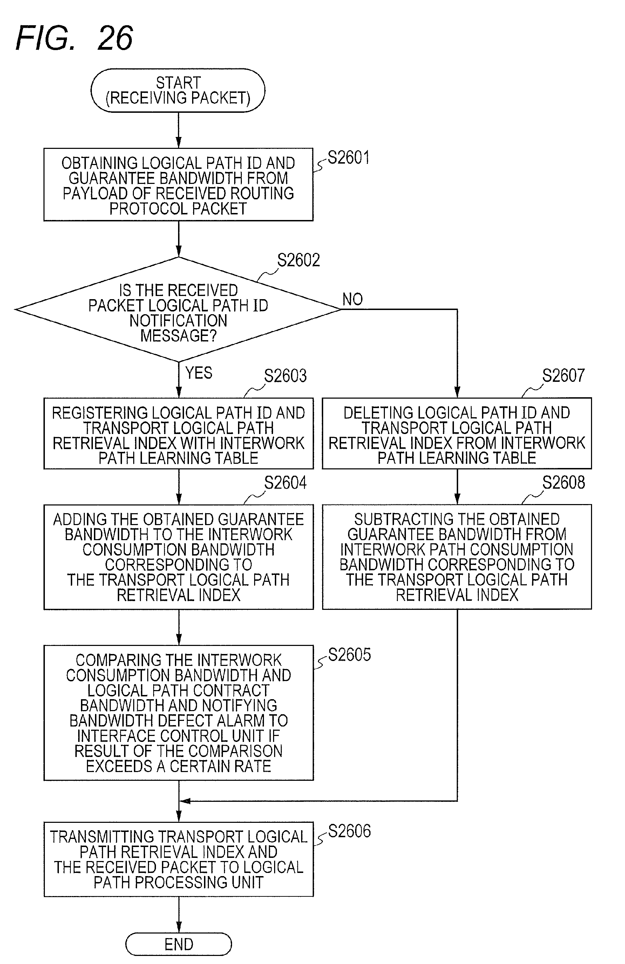

To realize these functions, the processing flow chart of the routing protocol snooping unit of the interwork IF 121 has been improved. The improved flow chart is shown in Fig.26.

The routing protocol snooping processing unit 604 collects the logical path ID of the first communication carrier and a type of the packet based on the routing information 211 of the routing protocol packet 200 and registers/deletes information of the interwork path learning table. Also the routing protocol snooping processing unit 604 updates the interwork path consumption table of the bandwidth monitoring table 643.

Upon receiving the routing protocol packet 200 from the destination MAC address retrieval unit 602, the routing protocol snooping processing unit 604 obtains the logical path ID and the guaranteed bandwidth information used on the network of the first communication carrier based on the routing information 211 (S2601). Next, the routing protocol snooping processing unit 604 judges the received packet is the logical path assignment message or the logical path deletion message (S2602). The type of message can be confirmed based on the routing information. If the received packet is the logical path assignment message, the routing protocol snooping processing unit 604 registers the logical path ID obtained from the received packet at interwork path ID 801 and registered the transport logical path retrieval index notified from the destination MAC address retrieval unit 602 at the transport logical path retrieval index 802 (S2603). By S2603, the packet transport node can be correspond to the logical path used in the network of the first communication carrier to the transport logical path used in the transport network of the second communication carrier on one-to-one.

Next, the routing protocol snooping processing unit 604 retrieves the bandwidth management table 643 based on the transport logical path retrieval index. The routing protocol snooping processing unit 604 adds the obtained guaranteed bandwidth information to the interwork path consumption bandwidth 2503 of an entry which is corresponding to the transport logical path retrieval index (S2604).

Next, the routing protocol snooping processing unit 604 compares the transport logical path contract bandwidth 2502 and the interwork consumption bandwidth 2503 and if the result of the comparison exceeds a certain rate, notifies a bandwidth defect alarm to the IF control unit 615 (S2605).

If the received routing protocol packet 200 is the logical path ID deletion message, the routing protocol snooping processing unit 604 retrieves the interwork path learning table 613 based on the logical path ID obtained from the received packet. If the interwork path ID 801 which is corresponding to the obtained logical path ID has registered at the table, the routing protocol snooping processing unit 604 deletes the transport logical path retrieval index 802 which is corresponding to the registered interwork path ID at interwork path learning table 613 (S2607) . By S2607, the routing protocol snooping processing unit 604 can delete the logical path which would not use in the network of the first communication carrier. Therefore, the interwork path learning table 613 needs to not have unnecessary entries.

Next, the routing protocol snooping processing unit 604 retrieves the bandwidth management table 643 based on the transport logical path retrieval index. The routing protocol snooping processing unit 604 subtracts the obtained guaranteed bandwidth from the interwork path consumption bandwidth 2503 which is corresponding to the transport logical path retrieval index (S2608).

The routing protocol snooping processing unit 604 forwards the transport logical path retrieval and the routing protocol packet 200 to the transport logical path processing unit 605 (S2606).

In this way, in the bandwidth guaranteed service, the packet transport node 320 can alert the network administrator of the second communication carrier when the consumption bandwidth exceed the certain rate for the contract bandwidth.

RSVP(Resource Reservation Protocol) and CRLDP(Constraint-based Routed Label Distribution Protocol) are examples of the routing protocol which can guarantee bandwidth resource of the communication node 310 that composes the network 301 of the first communication carrier.

### Second Embodiment

Hereafter, second embodiment of the present invention will be described in detail with reference to drawings.

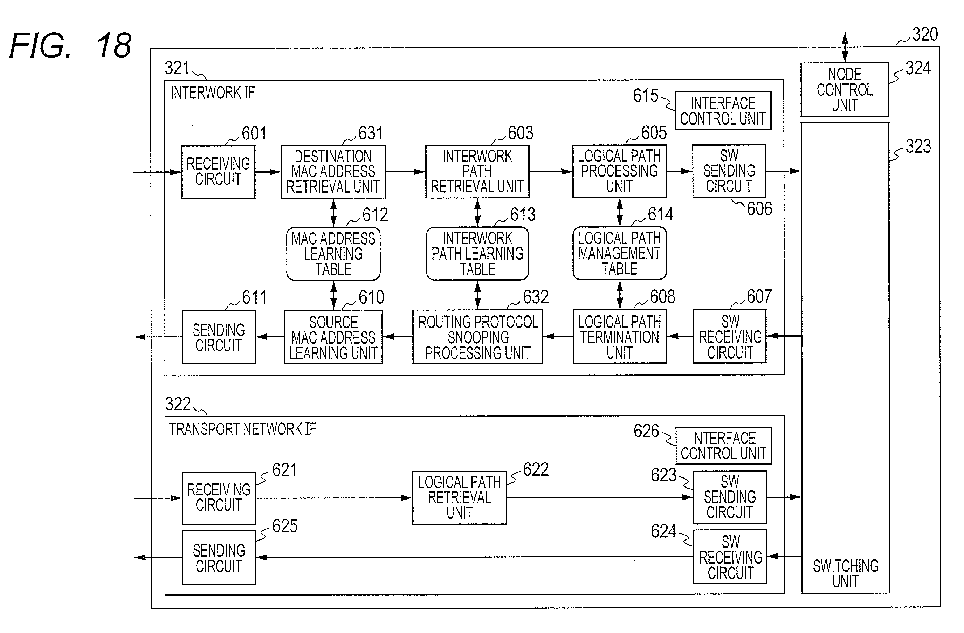

Fig. 18 shows a packet transport node of the second embodiment.

In the second embodiment, the routing protocol snooping processing unit 632 is located between the transport logical path termination unit 608 and the source MAC address learning unit 610. Locations of processing blocks other than the routing protocol snooping processing unit 632 are same as the first embodiment.

A network to be applied to the packet transport node shown in Fig 18 is same as the transport network 302 showed in Fig3 in the first embodiment.

In the second embodiment, the logical path ID to identify the logical path is notified from a end point of the logical path to a start point of the logical path in the routing protocol used on the network carrier of the first communication carrier. Therefore, when a logical path in a direction from the communication node 310-1 to the communication node 310-4 is established, the communication node 310-4 notifies a logical path ID to be set a logical path to the communication node 310-3, 310-2, 310-1. Upon receiving the routing protocol packet to notify the logical path ID from the communication node 310-4, the communication node 310-3 sets the logical path ID designated by the received routing protocol packet from the communication node310-4 to itself. The communication node310-3 notifies the logical path ID to the communication node 310-2 which is to be a passage of the logical path by sending the routing protocol packet. In this way, the logical path of End-to-End is established. Operations of the destination MAC retrieval unit 631 and routing protocol snooping processing unit 632 which are have differences from the first embodiment will be described in detail with reference to drawings.

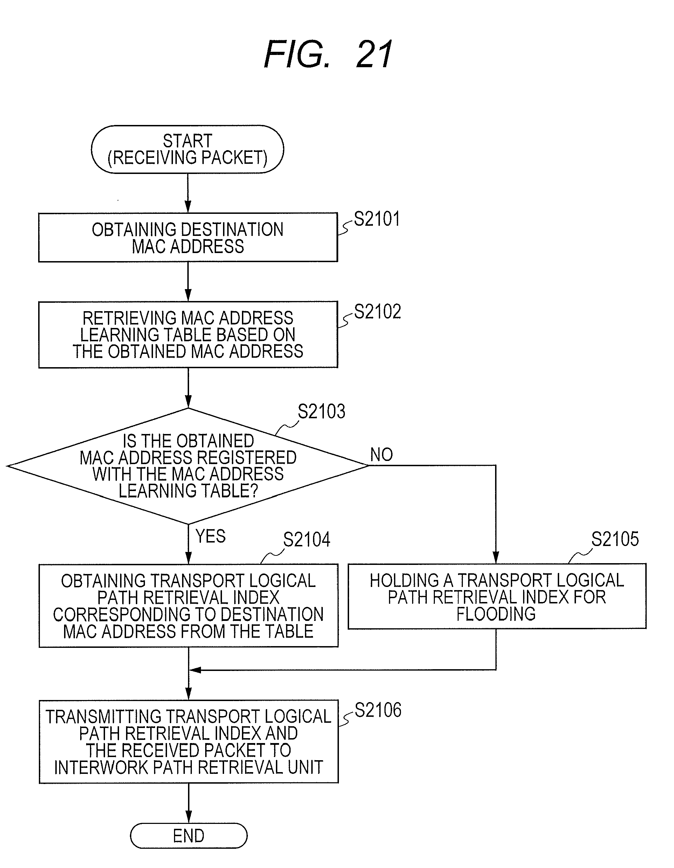

Upon receiving a packet, the destination MAC retrieval unit 631 obtains the destination MAC address 121 from the MAC header 111 of the received packet and confirms that the destination MAC address of the received packet has registered at the MAC learning table 612. An operation of the destination MAC retrieval unit 602 at the time of receiving a packet will be described with reference Fig 7 and Fig.21.

Fig.21 shows a processing flow chart of the destination MAC retrieval unit 631 of the packet transport node in the second embodiment. Upon receiving a packet, the destination MAC retrieval unit 631 obtains the destination MAC address 121 from the MAC header 111 of the received packet (S2101). Next, the destination MAC retrieval unit 631 retrieves the learning MAC address 701 of the MAC learning table 612 based on the obtained destination MAC address 121 (S2102). As a result of the retrieval of the MAC learning table 612, the destination MAC retrieval unit 631 judges the obtained MAC address has registered at the MAC learning table 612 (S2103). If the obtained MAC address has registered at the MAC learning table 612, the destination MAC retrieval unit 631 obtains the transport logical path retrieval index corresponding to the obtained destination MAC address from the table (S2104). If the obtained MAC address has not registered at the MAC learning table 612, the destination MAC retrieval unit 631 holds the transport logical path retrieval index for flooding which indicates the packet should be copied and forwarded to the all of logical path set to the interwork IF (S2107) . The destination MAC retrieval unit 631 forwards the transport logical path retrieval index 702 and the received packet to the interwork path retrieval unit 603 (S2106). It can be confirmed whether the received packet is a user data packet 100 or a routing protocol packet 102 based on the type 123 of the MAC header. Also if the received packet is the routing protocol packet 102, contents of a message are confirmed based on routing information of the routing protocol packet.

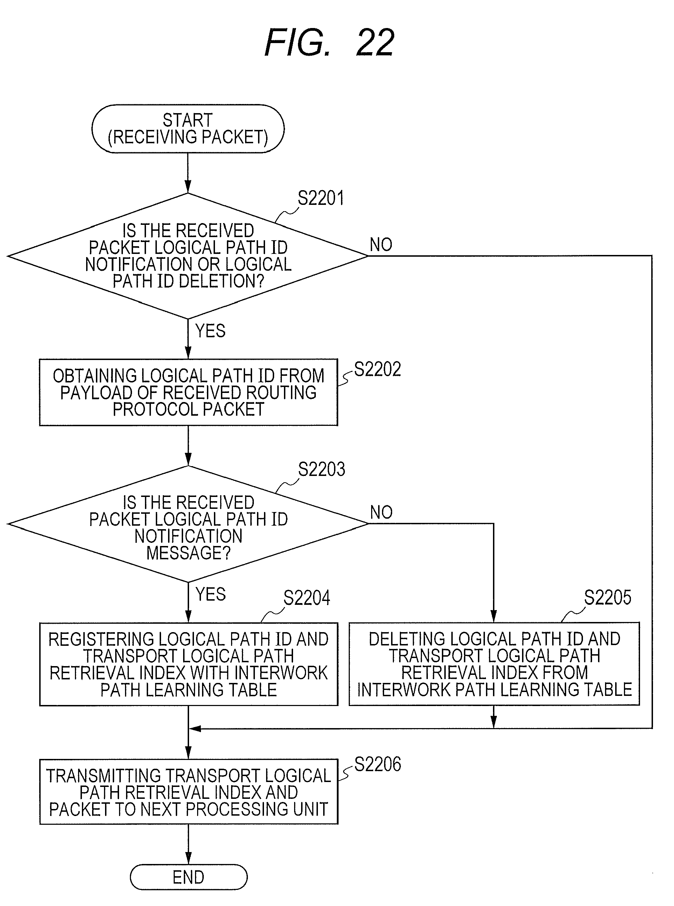

The routing protocol snooping processing unit 632 collects the logical path ID used in the network of the first communication carrier based on the routing information 211 of the routing protocol packet 200 and the type of the packet, and registers/deletes information of the interwork path learning table. An operation of the routing protocol snooping processing unit 604 at the time of receiving a packet will be described with refer to Fig.8 and Fig.22.

The routing protocol snooping processing unit 632 judges that the packet received from the routing protocol snooping processing unit 632 is a user data packet or a routing protocol packet 200. If the received packet is the routing protocol packet 200, the routing protocol snooping processing unit 632 judges that the routing protocol packet 200 is a logical path ID assignment packet to notify a logical path ID to communicate between communication nodes 310 of the first communication or a logical path ID deletion packet to delete a logical path ID to communicate between communication nodes 310 of the first communication (S2201).

If the received packet is the routing protocol packet 200 and also the logical path ID assignment packet or the logical path ID deletion packet, the routing protocol snooping processing unit 632 obtains the logical path ID used in the network of the first communication carrier based on the routing information 211(S2202). Next, the routing protocol snooping processing unit 632 confirms that the received packet is a logical path assignment message or the logical path deletion message (S2203). Type of a message can be confirmed based on the routing information. If the received routing protocol packet 200 is the logical path ID assignment message, the routing protocol snooping processing unit 632 registers the logical path ID obtained from the received packet at the interwork path ID 801 and registers the transport logical path retrieval index notified from the transport logical path termination unit 608 at the transport logical path retrieval index 802(S2204). By the S2204, the packet transport can relate the logical path used in the network of the first communication carrier to the transport logical path used in the transport network of the second communication carrier on one-on-one.

If the received routing protocol packet 200 is the logical path ID deletion message, the routing protocol snooping processing unit 632 retrieves the interwork path learning table 613 based on the logical path ID obtained from the received packet. If the logical path ID obtained from the received packet has registered at interwork path ID 801 of the table, the routing protocol snooping processing unit 632 deletes the registered interwork path ID 801 and the transport logical path retrieval index 802 corresponding to the logical path ID obtained from the received packet at the interwork path learning table 613 (S2206). By S2206, the packet transport can delete the logical path which would not be used in the network of the first communication carrier. Therefore, the interwork path learning table613 do not need to have discarded entries.

After processing either S2204 or S2205, the routing protocol snooping processing unit 632 forwards the logical path retrieval index and the routing protocol packet 200 to the transport logical path processing unit 605.

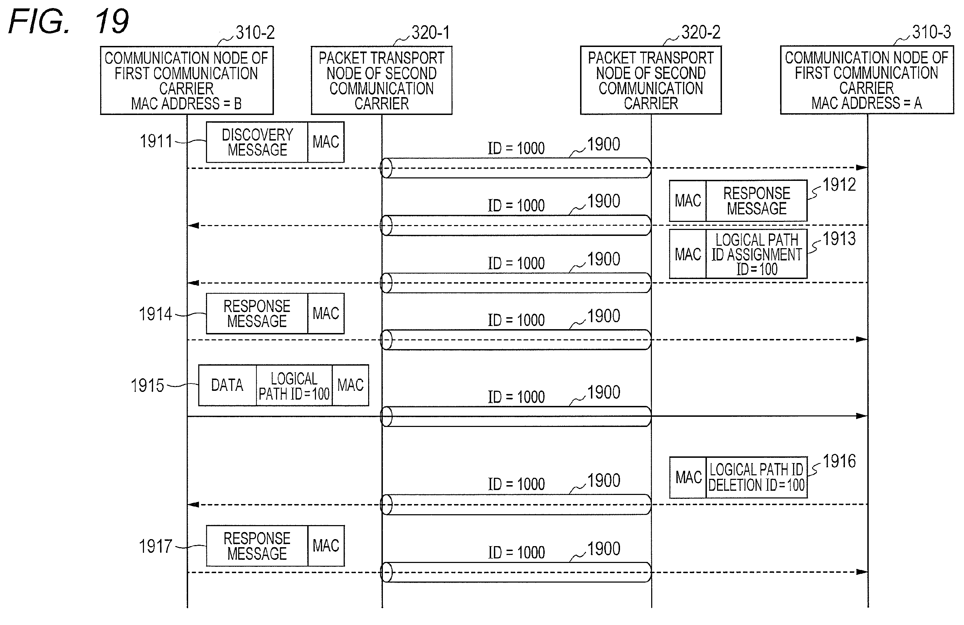

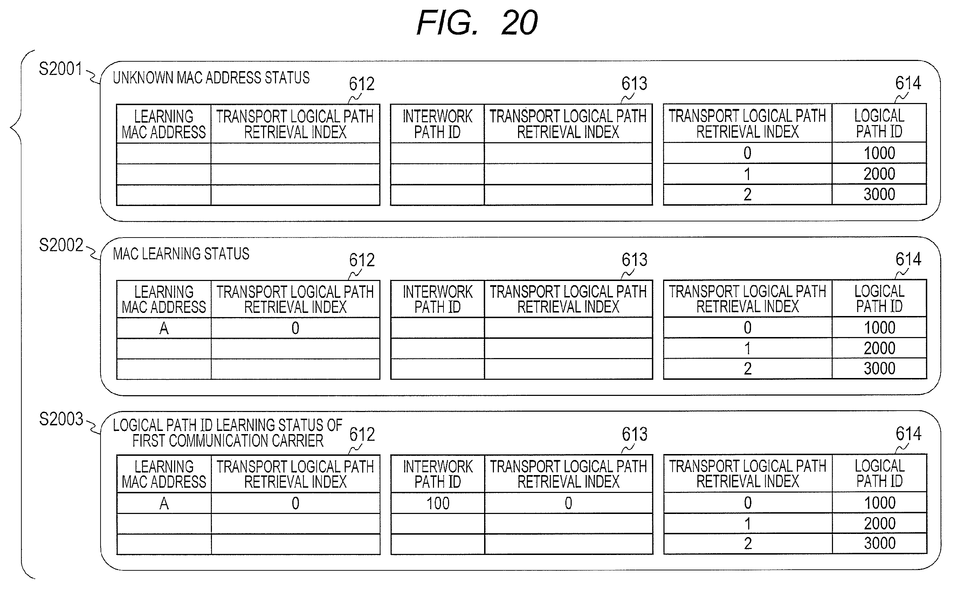

Next, a procedure of the packet transport node 320 at the time of learning the source MAC address and logical path ID of the first communication will be described with refer to Fig. 19 and Fig.20.

Fig. 19 shows a sequence for sending/receiving data and deleting the logical path after setting a logical path between the communication node 310-2 and the communication node 310-3 of the first communication carrier. Fig. 20 shows the MAC learning table 612, the interwork path learning table 613, and the transport logical path management table 614 of the packet transport node 320-1.

S2001 shows initial status of these tables which have set only the transport logical path provided to the first communication carrier. At this time, as the information of transport logical path 331, 332, and 333, a transport logical path retrieval index 0, transport logical path ID 1000, transport logical path retrieval index 1, transport logical path ID 200, transport logical path retrieval index 2, and transport logical path ID 3000 has registered at the transport logical path management table 614.

Upon starting to provide the network of the second communication carrier to the first communication carrier, the communication node310-2 sends a discovery message to confirm a existence of the communication node which uses the communication protocol same as communication node310-2 in the network. The destination MAC address of the discovery message 1911 is a broadcast address or multicast address to forward packets to all of the communication nodes 310 in the network. Upon receiving the discovery message, the packet transport node 320-1 copies the packet and forwards the copied packet to the transport logical path (331, 332, and 333) which is registered to the interwork IF 321 because the destination MAC address of the packet is the broadcast address or multicast address and the packet does not have the logical path header 112.

Upon receiving the discovery message 1911, the communication node 310-3 sends a response message 1912 to the communication node310-2. Upon receiving the response message 1912, the packet transport node 320-1 obtains transport logical path retrieval index 0 which is corresponding to the transport logical path ID 1000 of the transport logical path 331 of the transport network in which the response message has been forwarded from the transport logical path management table 614. Also the packet transport node 320-1 obtains MAC address 'A' of the MAC address of the communication node310 according to a location of the source MAC address 112 of the MAC header 111 and registers the MAC address 'A' and the transport logical path retrieval index '0' at the MAC learning table 612 (S2002). A MAC address response message is forwarded from the packet transport node 320-1 to the communication node 310-2.

Next, to set the logical path used in the network of the first communication carrier, the communication node 310-3 sends the logical path ID assignment message 1913 to the communication node 320-2. Upon receiving the packet, the communication node 320-2 encapsulates the logical path ID assignment message with transport logical path ID '1000' and forwards the packet to the transport network 302. Upon receiving the logical path ID assignment message , the packet transport node 320-1 obtains the transport logical ID '1000' based on the transport logical path header 402 of the received packet and retrieves the transport logical path management table 614 based on the transport logical path ID '1000'. In this way, the transport logical path retrieval index '0' can be obtained based on the transport logical path management table 614. Next, the packet transport node 320-1 judges the received packet is the logical path ID assignment message based on the routing information 211 and the routing protocol snooping processing unit 604 obtains the logical path ID '100' which would be set by the communication node 310 of the first communication carrier based on the routing information 211 and registers logical path ID '100' and the transport logical path retrieval index '0' at the interwork path learning table 613 (S2203).

Upon receiving the logical path ID assignment message 1913, the communication node 310-2 learns that a user data packet which should be forwarded to the communication node 310-3 is needed to set the logical path ID '100' to the logical path ID of the logical path header 112.

Upon receiving the logical path ID assignment message 1913, the communication node310-2 sends the response message 1912 to the communication node 310-3. To be received the response message 1912 at the communication node 310-3 makes the logical path 340 of the logical path ID '100' between the communication node 310-2 and communication node 310-3 open.

Upon opening the logical path 340, the first communication carrier starts to provide a communication service to users who contract to the first communication carrier. After that, the user data packet is sent from the communication node 310-2.

Upon receiving the user data packet 1915, the packet transport node 320-1 obtains the logical path ID '100' from the logical path header 112, retrieves the interwork path learning table 613 based on the logical path ID, and obtains the transport logical path retrieval index 802 '0' which is corresponding to the logical path ID '100'. Next, the packet transport node 320-1 retrieves the transport logical path management table based on the transport logical path retrieval index 802 and obtains the transport logical path ID '1000'. The packet transport node 320-1 generates the transport logical path header 402 which includes the obtained logical path ID, encapsulates the received user data packet, and forwards the packet to the transport network 302. In this way, even if the packet transport node receives the packet which includes a multicast address or a broadcast address as the destination MAC address 121, the packet transport node can forward the packet with the transport logical path ID '1000' of the transport logical path which is one of the transport logical path of the transport network because the logical path ID used by the communication node310-2 and the communication node 310-3 can be learned based on the logical path ID assignment message 1913.

Next, the logical path deletion message 1916 to delete the logical path used in the network of the first communication carrier is sent from the communication node 310-3 to the communication node 310-2.

Upon receiving the logical path ID deletion message, the packet transport node 320-1 obtains the transport logical path ID '1000' from the transport logical path header 402 of the received packet and retrieves the transport logical path management table 614 based on the transport logical path ID '1000'. In this way, the packet transport node obtains the transport logical path retrieval index '0' from the transport logical path management table 614. Next, the packet transport judges that the received packet is the path ID deletion message 1916 based on the routing information 211 and the routing protocol snooping processing unit 604 obtains the transport logical path ID '100' which would be deleted by the communication node 310 of the first communication carrier based on the routing information 211 and deletes the logical path ID '100' and the transport logical path retrieval index '0' at the interwork path learning table613 (S2002). Also the packet transport node 320-1 forwards the logical path ID deletion message 1916 to the communication node310-2.

A downstream label assignment of LDP (Label Distribution Protocol of IP/MPLS is an example of the communication protocol used in the network of the first communication carrier described in the second embodiment.

Also some routing protocols may send a logical path ID requirement message (not shown in Fig.) among a plurality of the communication nodes 310 before sending the logical path ID assignment message 1913.

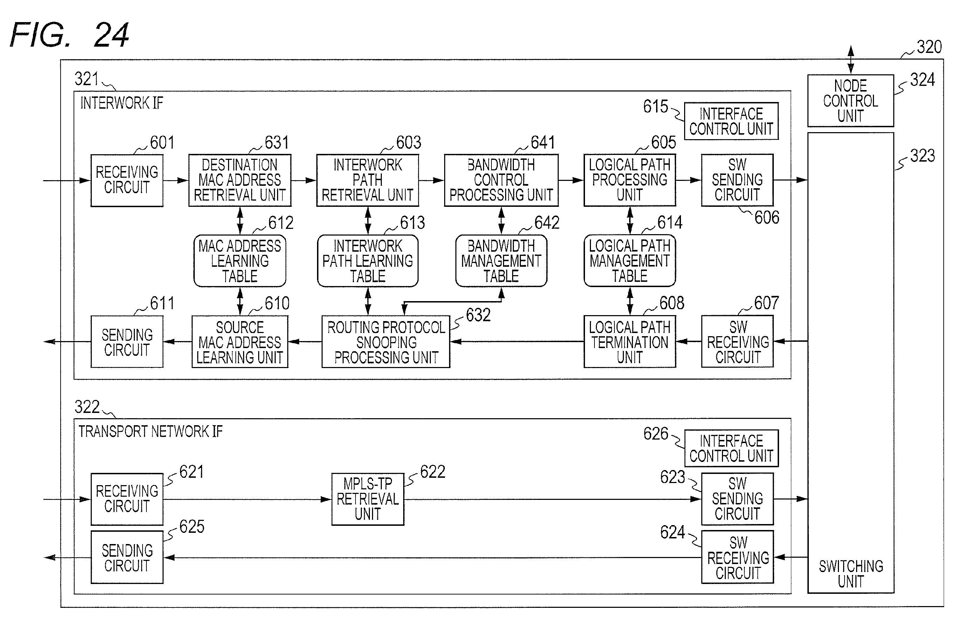

Fig.24, Fig.25, and Fig.32 show examples of expanded examples of the packet transport node 320 in the second embodiment.

The fist communication carrier may be provide a service to guarantee a contract bandwidth for contracants of the network 301 as an additional value function. In case the first communication carrier which uses a communication protocol which sets logical paths with a routing protocol provides the service to guarantee a contract bandwidth, the first communication carrier may use a routing protocol which can guarantee bandwidth resource if the communication nodes 310 which establish the network 310. In these routing protocols, the routing information of the logical path notification message includes not only logical path ID bot also bandwidth information to be guaranteed.

The first communication carrier which accommodates the network used said communication protocol needs to provide a service to guarantee a contract bandwidth for contractants of the transport network 102. At this time, a bandwidth control processing unit 641 is added to the interwork IF 121 of the packet transport node 320 of the second communication carrier.

The bandwidth control processing unit 641 monitors not to be flowed data which is exceeded to a bandwidth of contractants who use the transport logical path of the transport network 302 into the transport network 302. If the data which is exceeded to a bandwidth of contractants who use the transport logical path of the transport network 302 flows into the transport network 302, the bandwidth control processing unit 641 controls to discard the exceeded data, gives a increased disposal priority to the exceeded data, or gives a delay to the exceeded data.

The bandwidth management table 61-42 manages bandwidth contract information of contractant who uses the transport logical path of the transport network 302. Fig.25 shows an example of a configuration of the bandwidth management table. In the bandwidth management table 642, the packet transport node 320 includes the transport logical path retrieval index 2500 to manage the transport logical path ID of the transport network 302 in itself and the transport logical path contract bandwidth 2502 to hold the contract bandwidth of uses who contract to the transport logical path specified with the transport logical path retrieval index. Moreover, the bandwidth management table 642 includes the interwork path consumption bandwidth 2503 to manage the bandwidth of the logical path which is guaranteed by using the routing protocol among a plurality of the communication nodes 310.

In case, by the interwork path consumption bandwidth 2503, a plurality of the bandwidth guaranteed logical path is set in one transport logical path of the transport network 302 of the second communication carrier, the packet transport node 320 can know a bandwidth which the first communication carrier is using with comparing to a contract bandwidth which the first communication carrier contract to the second communication carrier. Therefore, the packet transport node 320 can alert to the network administrator of the second communication carrier when the bandwidth which the first communication carrier is using exceeds to a certain rate for said logical path contract bandwidth. Therefore, the network administrator of the second communication carrier can alert the network administrator of the first communication carrier to increase said logical path contract bandwidth.

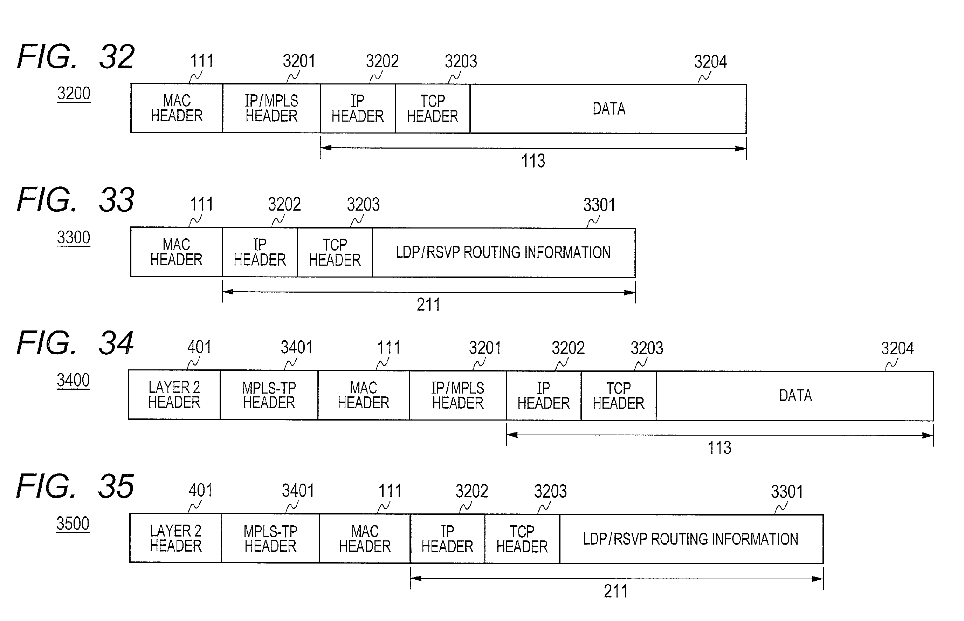

To realize these functions, the processing flow chart of the routing protocol snooping unit of the interwork IF 121 has been improved. The improved flow chart is shown in Fig.32.

The routing protocol snooping processing unit 604 collects the logical path ID of the first communication carrier and a type of the packet based on the routing information 211 of the routing protocol packet 200 and registers/deletes information of the interwork path learning table. Also the routing protocol snooping processing unit 604 updates the interwork path consumption table of the bandwidth monitoring table 643.

The routing protocol snooping processing unit 632 judges that the packet received from the transport logical path termination unit 608 is a user data packet 100 or the routing protocol packet 200. If the received packet is the routing protocol packet 200, the routing protocol snooping processing unit 632 judges that the received packet is the logical path ID assignment message to notify the logical path ID to communicate among a plurality of communication nodes 310 or the logical path ID deletion message to delete the logical path ID to communicate a plurality of communication nodes 310 of the first communication carrier S3101).

If the received packet is the routing protocol packet 200 and the logical path ID assignment message or the logical path ID deletion message, the routing protocol snooping processing unit 632 obtains the logical path ID and guaranteed bandwidth information based on the routing information 211 S3102). Next, the routing protocol snooping processing unit 632 confirms the received packet is the logical path ID assignment message or the logical path ID deletion (S3103). Type of messages can be confirmed based on the routing information. If the received routing protocol packet 200 is the logical path ID assignment message, the routing protocol snooping processing unit 632 registers the obtained logical path ID to the interwork path ID 801 and registers the transport logical path retrieval index notified from the transport logical path termination unit 608 to the transport logical path retrieval index 802 (S3104). By S2204, the packet transport node can relate the logical path used in the network of the first communication carrier to the transport logical path used in the transport network of the second communication carrier on one-on-one.

Next, the routing protocol snooping processing unit 632 retrieves the bandwidth management table 643 based on the transport logical path retrieval index. The routing protocol snooping processing unit 632 adds the obtained guaranteed bandwidth information to the interwork path consumption bandwidth 2503 of an entry that is corresponding to the transport logical path retrieval index (S3105).

Next, the routing protocol snooping processing unit 604 compares the transport logical path contract bandwidth 2502 and the interwork consumption bandwidth 2503 and if the result of the comparison exceeds a certain rate, notifies a bandwidth defect alarm to the IF control unit 615 (S3106).

If the received routing protocol packet 200 is the logical path ID deletion message, the routing protocol snooping processing unit 604 retrieves the interwork path learning table 613 based on the logical path ID obtained from the received packet. If the interwork path ID 801 that is corresponding to the obtained logical path ID has registered at the table, the routing protocol snooping processing unit 604 deletes the transport logical path retrieval index 802 that is corresponding to the registered interwork path ID at interwork path learning table 613 (S3108) . By S3108, the routing protocol snooping processing unit 604 can delete the logical path that would not use in the network of the first communication carrier. Therefore, the interwork path learning table 613 needs to not have unnecessary entries.

Next, the routing protocol snooping processing unit 604 retrieves the bandwidth management table 643 based on the transport logical path retrieval index. The routing protocol snooping processing unit 604 subtracts the obtained guaranteed bandwidth from the interwork path consumption bandwidth 2503 that is corresponding to the transport logical path retrieval index (S3109).

The routing protocol snooping processing unit 604 forwards the transport logical path retrieval and the routing protocol packet 200 to a next processing unit 605 (S3107).

In this way, in the bandwidth guaranteed service, the packet transport node 320 can alert the network administrator of the second communication carrier when the consumption bandwidth exceed the certain rate for the contract bandwidth.

RSVP (Resource Reservation Protocol) and CRLDP(Constraint-based Routed Label Distribution Protocol) are examples of a routing protocol that can guarantee bandwidth resource of the communication nodes 310 that compose the network 301 of the first communication carrier.

### Third Embodiment

Hereafter, the third embodiment of the present invention will be described in detail with reference to drawings.

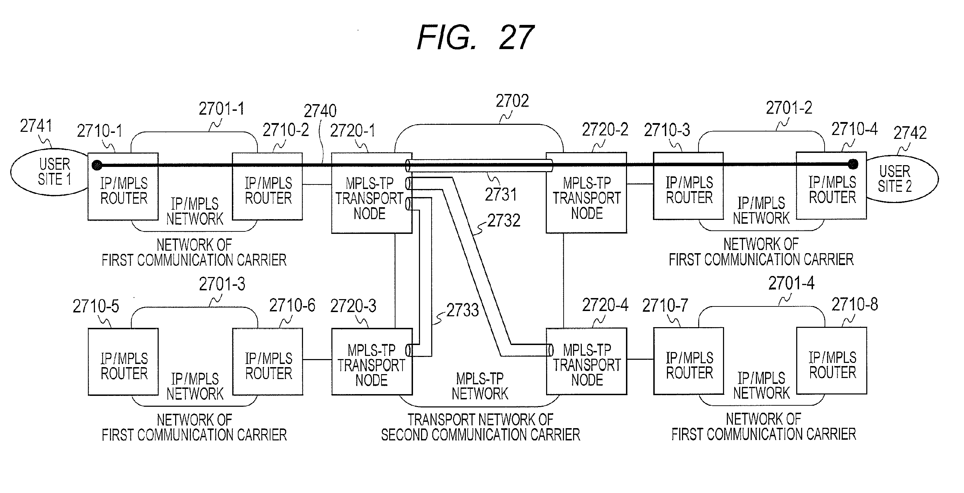

Fig.27 shows an example of specifying the communication protocol of the first communication carrier to IP/MPLS protocol and specifying the communication protocol of the second communication carrier to MPLS-TP protocol in Fig.3.

Fig. 27 is an example of a transport network composed with packet transport node of the present invention. The transport network interworks networks that are geographically distant.

In Fig.27, there are a first communication carrier and second communication carrier and four networks 2701-1, 2701-2, 2701-3, and 2701-4 that are geographically distant are interworked via a transport network 2702 of second communication carrier

In the network 2701-1 of the first communication carrier, IP/MPLS (Internet Protocol/ Multi-Protocol Label Switching) protocol is used. In the network 2702 of the second communication carrier, MPLS-TP (Multi-Protocol Label Switching
- Transport Profile) protocol is used.

Fig. 32 and Fig.33 show format of a user data packet 3200 and routing protocol packet 3300.

A user data packet 3200 of IP/MPLS includes the MAC header 111, IP/MPLS header 3201, and payload 113. Moreover, the payload includes IP header 3202, TCP header 3203, and data 3204.

A routing protocol packet 3300 of IP/MPLS includes MAC header 111 and routing information 211. Moreover, the routing information 211 includes IP header 3202, TCP header 3203, and routing information 3301 (ex.LDP RSVP).

Difference between the communication protocol 1 and the IP/MPLS protocol is that the logical path header in communication protocol 1 has changed to IP/MPLS header and the logical path ID of the logical path header in the communication protocol has changed to IP/MPLS label ID. There is no difference in functions.

Fig.34 shows flame format 400 of encapsulated user packet with MPLS-TP protocol.

MPLS-TP header 3401 is added to outside of the MAC header 111 of the IP/MPLS user data packet upon encapsulating the IP/MPLS user data packet. Furthermore, Layer 2 header 400 used in the MPLS-TP transport network 2702 is added.

Fig.35 shows flame format 3500 of encapsulated routing protocol packet 3300 with MPLS-TP protocol.

MPLS-TP header 3401 is added to outside of the MAC header 111 of the IP/MPLS routing protocol packet upon encapsulating the routing protocol packet 3300. Furthermore, Layer 2 header 400 used in the MPLS-TP transport network 2702 is added.

Difference between the communication protocol 2 and the MPLS-TP protocol is that the transport logical path header 402 in communication protocol 2 has been changed to MPLS-TP header. There is no difference in functions.

If Ethernet is used as a Layer 2 protocol in MPLS-TP network, the MAC header 111 used in the IP/MPLS network can be used. Fig. 38 and Fig. 39 show packet formats that MAC header used in IP/MPLS network is applied. Fig. 38 shows a packet format 3800 to forward the user data packet 3200 via MPLS-TP network. MPSL-TP header 3401 is added between MAC header 111 and IP/MPLS header 3201 of the received user data packet. Fig. 39 shows a packet format 3900 to forward to a routing protocol packet 3300 via the network of the second communication carrier. The transport logical path header 3401 is added between the MAC header 111 and IP header 3202. In this way, by applying MAC header 111 used in the IP/MPLS network, an overhead can be reduced. Hereinafter, as the packet format used in the second communication carrier, Fig.34 and Fig.35 will be used in descriptions of the embodiment, but if the packet format of Fig.38 and Fig.39 is used, there is same advantages as using the packet format of Fig.34 and Fig.35 in same processing.

The network of the first communication carrier is composed by IP/MPLS routers. The IP/MPLS router sets MPLS logical path among a plurality of IP/MPLS routers by using a routing protocol (LDP, RSVP, or etc.). A data packet inputted from a user site to the network is added IP/MPLS header to identify the IP/MPLS logical path. IP/MPLS router specifies a forwarding destination of the packet based on the IP/MPLS header.

An example of Fig. 27, a user site 1 2471 and user site 2 2472 are connected to respectively two networks that are geographically distant. The logical path 2740 that connects the two sites is set between IP/MPLS router 2710-1 and IP/MPLS router 2710-4. The logical path 2740 is set between IP/MPLS router 2710-1, 2710-2, 2710-3, and 2710-4 by using the routing protocol. The transport network of the second communication carrier needs to forward also the routing protocol packet, to establish logical paths among End-to-End of the first communication carrier networks that are geographically distant.

The transport network 2702 of the second carrier is composed by MPLS-TP transport nodes 2720. For the logical path among a plurality of MPLS-TP transport nodes, the MPLS-TP logical path that can use users (other communication carrier) who have a contract for the transport network 2702 is set by a network management system preliminarily. In an example of Fig.27, three MPLS-TP logical paths 2731, 2732, and 2733 is set.

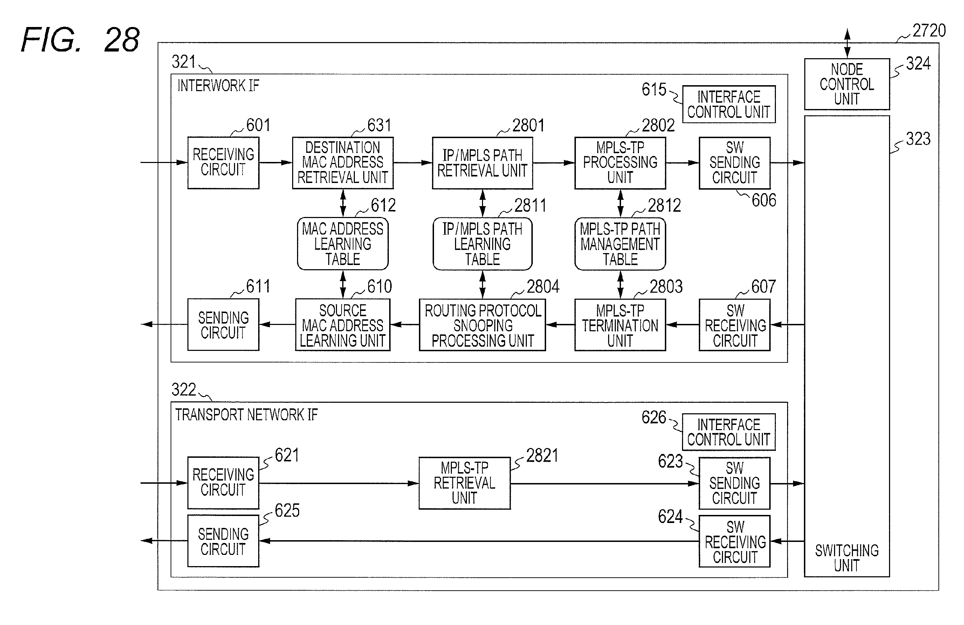

Fig. 28 shows a configuration of a MPLS-TP transport node 2720 of the present invention to realize interworking IP/MPLS networks that are geographically distant via MPLS-TP transport network 2702. The MPLS-TP transport node 2720 can be applied when the first communication carrier uses downstream label assignment of LDP as a routing protocol.

The MPLS-TP transport node 2720 includes at least one switching unit 323, at least one node control unit 324, at least one transport network IF322, and at least one interwork IF 321. The switching unit 323, the node control unit 324, the transport network IF322, and the interwork IF 321 are connected with each other. These components are same as the packet transport node 320 of Fig. 18. Difference are a IP/MPLS path learning table 2811 of the interwork IF 321, a MPLS-TP path management table, an IP/MPLS logical path retrieval unit 2801, a MPLS-TP processing unit, a MPLS-TP termination unit 2803, a routing protocol snooping processing unit 2804, and a MPLS-TP retrieval unit 2821 of the transport network IF 322.

Function blocks that are the difference will be described in detail.

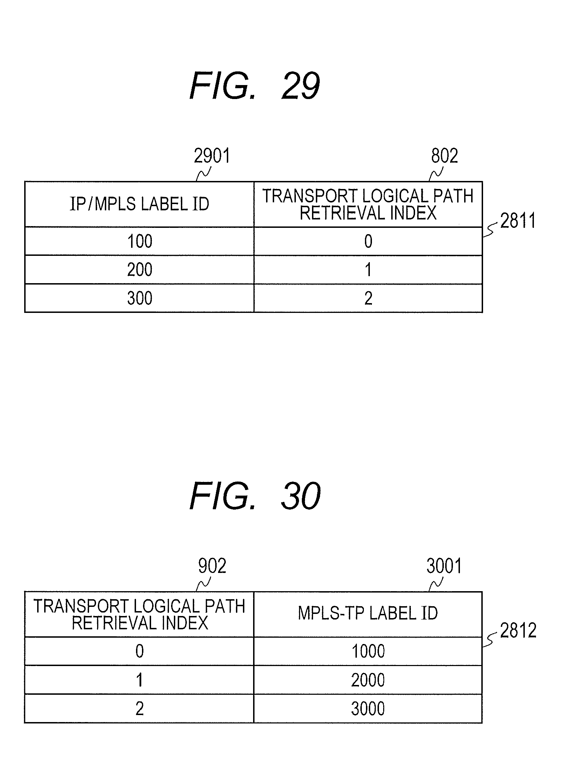

Fig. 29 shows a configuration of the IP/MPLS path learning table 2811. Difference between the IP/MPLS path learning table 2811 and the interwork path learning table 614 is that the name of the interwork path ID has changed to IP/MPLS label ID 2901.

Fig 30 shows an example of a configuration of the MPLS-TP path management table 2812. Difference between the MPLS-TP path management table 2812 and the transport logical path management table is the name of the transport logical path ID has been changed to MPLS-TP label ID 3102.

Difference between the IP/MPLS logical path retrieval unit 2801 and the interwork path retrieval unit 603 is that a header of the received packet to be referred has changed the logical path header 112 into IP/MPLS header 3201. The IP/MPLS logical path retrieval unit 2801 obtains a MPLS-TP label ID based on a IP/MPLS header 3201 and retrieves the IP/MPLS path learning table based on the obtained MPLS-TP label ID. Other operations are same as the interwork path retrieval unit 603.

Difference between the MPLS-TP processing unit 2802 and the transport logical path processing unit 605 is a header to be added has been changed the transport logical path header into the MPLS-TP header. Upon receiving a packet, the MPLS-TP processing unit 2802 retrieves the MPLS-TP path management table 2812, and obtains the MPLS-TP label ID 3000, and generates MPLS-TP header.

Difference between the MPLS-TP termination unit 2803 and the transport logical path termination unit 608 is a header of the received packet to be referred has been changed the transport logical path header 402 into the MPLS-TP header 3400. Configuration information of the transport logical path header 402 and the MPLS-TP is same.

Difference of the routing protocol snooping processing unit 2804 is that information to be obtained from the received routing protocol packet has been changed a name of the logical path ID into the IP/MPLS label ID.

The MPLS-TP transport node 2720 of the present invention can be interwork IP/MPLS networks that are geographically apart via MPLS-TP transport network.

Also by equipping the routing snooping processing unit 2804 between the destination MAC retrieval unit 602 and the MPLS-TP processing unit 2802, it can be applied to a downstream label assignment of LDP as same as the packet transport described in Fig.6 of the first embodiment..

Furthermore, by including the bandwidth control processing unit 641 and the bandwidth management table 642, it can be applied to RSVP and CRLDP as same as Fig. 23 of the first embodiment and Fig.24 of the second embodiment.

## Claims

1. A communication method for communication between a first
network and a third network via a second
network, comprising:
sending a first packet from a communication node in the third network to a communication node in the
first network via the second network;
receiving the first packet at a first packet transport node, which is connected to the first network and the second network;
registering correspondence information including a source MAC address of the first packet and a second logical path identifier to identify one of a plurality of second logical paths in the second network, wherein the source MAC address of the first packet and the second logical path are included in header of the first packet,
sending a second packet from the communication node in the first network to the communication node in the third network;
and
receiving the second packet from the first network at the first packet transport node ,
adding to the correspondence information a first logical path identifier to identify one of a plurality of first logical paths in the first network and third network if a destination MAC address of the second packet is the same as the source MAC address of the first packet.

2. The communication method of claim 1, further comprising:
upon receiving a third packet from the first network at the first packet transport node, converting header
information in the third packet from the first logical path identifier to the second logical identifier based on the correspondence information;
upon receiving the converted third packet from the second network at a second packet transport node,
which is connected to the second network and third network, converting header information in the converted third packet from the second logical path identifier to the first logical identifier.

3. The communication method of claim 1, further comprising:
deleting the correspondence information upon receiving a logical path identifier deletion packet from the first network at the first communication node.

4. The communication method of claim 1,
wherein the second packet is a first logical path identifier assignment packet for the first network and the third network.

5. The communication method of claim 1, further comprising:
including in a bandwidth management table a first logical path bandwidth that is guaranteed for the plurality of the first logical paths and a second logical path bandwidth that is guaranteed for the one of the plurality of the second logical paths at the first packet transport node;
extracting a required bandwidth from a first path logical path identifier assignment packet to notify the first logical path identifier in the first network and the third network at the first packet transport node;
adding the required bandwidth to the first logical path bandwidth at the first packet transport node; and
controlling a transmission rate of packets that are communicated from the first network to the third network via the second network based on the first logical path bandwidth at the first packet transport node
wherein one of the plurality of the second logical path accommodates the plurality of the first logical paths,

6. The communication method of claim 5,
wherein a bandwidth defect alarm is notified if a difference between the first logical path bandwidth and the second logical bandwidth exceeds a threshold.

7. The communication method of claim 5,
wherein a ration of the first logical path bandwidth to the second logical bandwidth exceeds a threshold.

8. A packet transport node connected to a first network and a second network, the first network
communicating with a first communication protocol that includes a plurality of first logical paths and the second network communicating with a second communication protocol that includes a plurality of second logical paths, comprising:
a first receiving unit that receives a first packet from the second network,
a second receiving unit that receives a second packet from the first network,
a first address retrieval unit that registers correspondence information including a source MAC address of the first control packet and a second logical path identifier to identify one of the plurality of the second logical path, wherein the source MAC address of the first control packet and the second logical path identifier to identify one of the plurality of the second logical path are included in the first packet,
a second address retrieval unit that adds to the correspondence information a first logical path identifier included in the second packet if a destination MAC address of the second packet is the same as the source MAC address of the first packet.

9. The packet transport node of claim 8, further comprising:
a logical path identifier converting unit that upon receiving a third packet at the second receiving unit, converts header information in the third packet from the first logical path identifier to the second logical identifier based on the correspondence information, and that upon receiving a forth packet at the first receiving unit, converts header information in the forth packet from the second logical path identifier to the first logical identifier based on the correspondence information.

10. The packet transport node of claim 8,
wherein the second address retrieval unit deletes the correspondence information upon receiving a logical path identifier deletion packet at the second receiving unit.

11. The packet transport node of claim 8,
wherein the second control packet is a first logical path identifier assignment packet in the first network.

12. The packet transport node of claim 8,
wherein one of the plurality of the second logical paths accommodates the plurality of the first logical paths.

13. The packet transport node of claim 12, further comprising:
a bandwidth management table including a first logical path bandwidth, which is guaranteed for the plurality of the first logical paths, and a second logical path bandwidth, which is guaranteed for the one of the second logical paths and
a bandwidth control unit that controls a transmission rate of packets that are communicated from the first
network to the second network based on the first logical path bandwidth, the first logical path bandwidth being modified by the second address retrieval unit extracting a required bandwidth from a first path logical path identifier assignment packet to notify the first logical path identifier in the first network and adding the required bandwidth to the first logical path bandwidth at the packet transport node.

14. The packet transport node of claim 13,
wherein the second address retrieval unit notifies a bandwidth defect alarm to an interface control unit if a difference between the first logical path bandwidth and the second logical path bandwidth exceeds a threshold.

15. The packet transport node according to claim 8, wherein
IP/MPLS protocol is used for the first communication protocol.

16. The packet transport node according to claim 8, wherein
MPLS-TP protocol is used for the second communication protocol.

17. The packet transport node according to claim 8, wherein
the control packet is Label Distribution Protocol.

18. The packet transport node according to claim 8, wherein
the control packet is Resource Reservation Protocol or Constraint-based Routed Label Distribution Protocol.
